# EUROPÄISCHE PATENTSCHRIFT

(11) **EP 1 725 795 B1**
(45) Veröffentlichungstag und Bekanntmachung des Hinweises auf die Patenterteilung: **28.05.2008**
(21) Anmeldenummer: 05715900.6
(22) Anmeldetag: 10.03.2005
(51) Int. Cl.: F16K 1/44, F16K 31/122

(54) **VORRICHTUNG ZUM ANTRIEB EINES DOPPELSITZVENTILS**
DEVICE FOR ACTUATING A DOUBLE-SEAT VALVE
DISPOSITIF POUR ENTRAINER UNE SOUPAPE A DOUBLE SIEGE

(30) Priorität: 15.03.2004 DE 102004012462
(43) Veröffentlichungstag der Anmeldung: 29.11.2006
(73) Patentinhaber: TUCHENHAGEN GmbH, 21514 Büchen (DE)
(72) Erfinder: BURMESTER, Jens, 23883 Grambek (DE)
(74) Vertreter: Glaeser, Joachim
(86) Internationale Anmeldenummer: PCT/EP2005/002518
(87) Internationale Veröffentlichungsnummer: WO 2005/093299

(56) Entgegenhaltungen:
- EP-A- 0 545 846
- EP-B- 0 866 934
- EP-B- 0 868 619
- PATENT ABSTRACTS OF JAPAN Bd. 006, Nr. 260 (M-180), 18. Dezember 1982 (1982-12-18) & JP 57 154564 A (IWAI KIKAI KOGYO KK), 24. September 1982 (1982-09-24)

## Beschreibung

### TECHNISCHES GEBIET

Die Erfindung betrifft eine Vorrichtung zum Antrieb eines Doppelsitzventils nach dem Oberbegriff des Anspruchs 1, wobei das Doppelsitzventil entweder mit einem ersten als Schieberkolben ausgebildeten Schließglied und einem zweiten als Sitz teller ausgebildeten Schließglied oder mit zwei als Sitzteller ausgebildeten Schließgliedern ausgeführt sein kann.

### STAND DER TECHNIK

Eine Vorrichtung der gattungsgemäßen Art ist aus der EP 0 866 934 B1 bekannt. Diese Antriebsvorrichtung, die in Fachkreisen auch als sog. "integrierter" Antrieb bezeichnet wird, da sie in einem gemeinsamen Gehäuse sowohl die Hauptverstelleinrichtung für den vollen Öffnungshub H als auch die Einzeiverstelleinrichtungen für die Teiloffenstellungen T1 und T2 beherbergt, ist geeignet, bei einem Doppelsitzventil, das zwei als Sitzteller ausgebildete Schließglieder aufweist, die geforderte Hubkinematik; nämlich die volle Offenstellung H und die beiden gleichgerichteten, in Richtung der vollen Offenstellung' H weisenden Teiloffenstellungen T1, T2 auszuführen.

Ein sitzreinigungsfähiges Doppelsitzventil, wie es aus der EP 0 968 382 B1 bekannt ist, weist ein als Schieberkolben ausgebildetes, unabhängig bewegbares erstes Schließglied und ein als Sitzteller ausgebildetes, abhängig bewegbares zweites Schließglied auf. Die Sitzreinigung des Schieberkolbens erfordert eine der vollen Öffnungsbewegung gegenläufige erste Teiloffenstellung T1 des Schieber kolbens. Diese erste Teiloffenstellung T1 reicht dabei so weit, dass die Durchlassöffnungen, die zwischen zwei axial beabstandeten, im Schieberkolben angeordneten radialen Sitzdichtungen vorgesehen sind, mit dem der freigelegten Sitzfläche benachbarten Ventilgehäuseteil verbunden sind und dabei die leckagehohlraumseitige Sitzdichtung des Schieberkolbens in der zylindrischen Ventilsitzfläche dichtend verbleibt. Die Durchlassöffnungen verbinden die mantelflächenseitige Umgebung des Schieberkolbens mit dem Leckagehohlraum. Hierbei handelt es sich um ein Doppelsitzventil, bei dem im Sinne einer konsequenten Umsetzung der Sicherheitsphilosophie des Doppelsitzventils jeweils im Zuge der Sitzreinigung des spaltweit von seiner Sitzfläche angelüfteten Schließgliedes eine doppelte und leckageraumgesicherte Abdichtung gegenüber dem durch das andere Schließglied geschlossenen Ventilgehäuseteil gegeben ist. Eine diesbezügliche Hubkinematik ist mit der aus der Druckschrift EP 0 866 934 B1 bekannten Antriebsvorrichtung nicht realisierbar.

In der Druckschrift EP 0868 619 B1 (Figur 6) wird für die vorgenannte Doppelsitzventil-Bauart (Schieberkolben/Sitzteller) eine Antriebsvorrichtung vorgeschlagen, die der Antriebsvorrichtung für das Doppelsitzventil gemäß EP 0 968 382 B1 offensichtlich als Vorbild gedient hat. Darüber hinaus offenbart die Druckschrift EP 0868 619 B1 (**Figuren 1** bis **5**) eine weitere Antriebsvorrichtung für ein Doppelsitzventil mit zwei als Sitzteller ausgebildeten Schließgliedern, wobei diese Antriebsvorrichtung geeignet ist, den jeweiligen Sitzteller in die zugeordnete Teiloffenstellung T1 bzw. T2 zu überführen und wobei diese Teiloffenstellungen jeweils von außen einstellbar sind. Eine derartige Einstellbarkeit ist unter Umständen von Vorteil, sie ist jedoch in jedem Falle relativ aufwändig. In jedem Falle ist es generell wünschenswert, die Teilhübe T1, T2 (Teiloffenstellungen) der beiden Sitzteller sicherzustellen, ohne dass aufwändige konstruktive Maßnahmen zur Einstellbarkeit dieser Teilhübe vorzusehen sind. Die vorstehend genannten Antriebsvorrichtungen sind alle kompakt aufgebaut und damit schnellschaltend.

Unabhängig davon, ob es sich um ein Doppelsitzventil mit einem Schieberkolben und einem Sitzteller oder um ein solches mit zwei als Sitzteller ausgebildeten Schließgliedern handelt, wird angestrebt, den vollen Öffnungshub H und die Teiloffenstellungen T1 und T2 der beiden Schließglieder mit einer Antriebsvorrichtung zu betreiben, bei der die für die beiden vorgenannten unterschiedlichen Doppelsitzventil-Bauarten notwendigen Antriebsvarianten hinsichtlich der diese Varianten nach Anzahl und Formgebung bildenden Teile weitgehend baugleich sind. Gemessen an dieser Forderung bleibt die in der EP 0 868 619 B1 beschriebene Antriebsvorrichtung mit ihren beiden Varianten (Figuren 1 bis 5; Figur 6) weit zurück; die Antriebsvorrichtung gemäß EP 0 866 934 B1 kann lediglich die Hubkinematik eines sitzreinigungsfähigen Doppelsitzventils bedienen, das mit zwei Sitztellern ausgestattet ist.

Aufgabe der vorliegenden Erfindung ist es, eine Vorrichtung der gattungsgemäßen Art derart zu gestalten, dass sie mit der Gesamtheit ihrer Bauteile universell sowohl für Doppelsitzventile mit einem Schieberkolben und einem Sitzteller als auch für Doppelsitzventile mit zwei Sitztellern einsetzbar ist.

### ZUSAMMENFASSUNG DER ERFINDUNG

Die Aufgabe wird gelöst durch eine Vorrichtung zum Antrieb eines Doppelsitzventils mit den Merkmalen des Anspruchs 1. Vorteilhafte Ausführungsformen der vor geschlagenen Vorrichtungen sind Gegenstand der Unteransprüche.

Die Erfindung geht aus von einer gattungsgemäßen Vorrichtung zum Antrieb eines Doppelsitzventils, die als Grundkonfiguration drei Antriebskolben aufweist, wobei ein erster Antriebskolben innenseits einen zweiten Antriebskolben umfänglich umschließt und in sich aufnimmt und diese beiden Antriebskolben gemeinsam für den vollen Öffnungshub H zuständig sind. Ein dritter Antriebskolben, der unter der Kolbenanordnung des ersten und des zweiten Antriebskolbens angeordnet ist, bewirkt die zweite Teiloffenstellung T2 des abhängig angetriebenen, als Sitzteller ausgebildeten Schließgliedes, während eine gegenläufige Spreizbewegung des ersten und des zweiten Antriebskolbens, die ein axiales Auseinanderfahren dieser beiden Kolben bewirkt, die erste Teiloffenstellung T1 des unabhängig angetriebenen, gleichfalls als Sitzteller ausgebildeten Schließgliedes vollzieht. Die gattungsgemäße Vorrichtung ist nur in der Lage, die Hubkinematik für ein Doppelsitzventil zu generieren, bei dem die drei Hübe H, T1 und T2 alle den gleichen Durchlaufsinn haben.

Bei einem Doppelsitzventil, bei dem das erste Schließglied ein Schieberkolben ist, ist dessen erste Teilhubbewegung T1 gegenläufig zur Öffnungsbewegung H. In diesem Falle stützt sich der erste Antriebskolben, der gemäß einem ersten erfinderischen Grundgedanken innenseits begrenzt axial verschieblich von der ersten Antriebsstange unmittelbar durchdrungen ist, an einer Anschlagfläche am Gehäuse der Antriebsvorrichtung ab und im Zuge der vorgenannten Spreizbewegung verschiebt der zweite Antriebskolben die mit ihm fest verbundene erste Antriebsstange und damit die erste Verstellstange und den Schieberkolben so weit nach unten, bis bei einem Doppelsitzventil gemäß EP 0 968 382 B1 die dem ersten Ventilgehäuseteil benachbarte erste Sitzdichtung spaltweit von ihrer zugeordneten zylindrischen Sitzfläche entfernt ist. Bei einem Doppelsitzventil mit nur einer Sitzdichtung auf dem Schieberkolben (z.B. EP 0 868 619 B1) wird generell sinngemäß verfahren, sodass hier die gesamte zylindrische Sitzfläche freigelegt ist.

Die axiale Spreitzbewegung des ersten und des zweiten Antriebskolbens, die nunmehr allein vom zweiten Antriebskolben ausgeführt wird, ist beendet, wenn die erste Antriebsstange so weit nach unten verschoben ist, dass diese mit einem Rezess an dem ersten Antriebskolben zur Anlage kommt. In dieser Stellung liegt gleichzeitig der zweite Antriebskolben am oberen stirnseitigen Ende der als Hohlstange ausgebildeten zweiten Antriebsstange auf. Dadurch wird in der ersten Teiloffenstellung T1 des Schieberkolbens der in seiner Schließlage verbleibende Sitzteller auf seiner Sitzfläche quasi formschlüssig niedergehalten und kann damit nicht unplanmäßig öffnen oder aufgedrückt werden. Die vorstehend beschriebene Hubkinematik wird dadurch erreicht, dass der erste Antriebskolben auf der ersten Antriebsstange begrenzt axial verschieblich angeordnet und der zweite Antriebskolben auf der ersten Antriebsstange unverschieblich festgelegt sind, während die zweite Teilhubbewegung T2 des zweiten Schließgliedes und damit des dritten Antriebskolbens ihre Begrenzung an einer am Gehäuse der Antriebsvorrichtung ausgebildeten Anschlagfläche findet.

Durch die Anordnung des ersten und des zweiten Antriebskolbens unmittelbar auf der ersten Antriebsstange unterscheidet sich die erfindungsgemäße Vorrichtung signifikant von der gattungsgemäßen Vorrichtung. Aus diesem Unterschied leiten sich die nachfolgend noch dargestellten weiteren erfinderischen Merkmale und Vorteile wesentlich ab.

Der zweite grundlegende erfinderische Gedanke führt zu einer zweiten Ausführungsform der erfindungsgemäßen Vorrichtung und besteht darin, dass zur Realisierung der Hubkinematik für ein Doppelsitzventil, das zwei Sitzteller aufweist, die Anordnung des ersten, des zweiten und des dritten Antriebskolbens zueinander und in Relation zum Antriebsgehäuse unverändert erhalten bleibt und dass auch weiterhin der erste und der zweite Antriebskolben unmittelbar auf der ersten Antriebsstange in Verbindung mit der ersten Verstellstange angeordnet sind. Der erste Antriebskolben ist auf der ersten Antriebsstange nunmehr unverschieblich festgelegt, während der zweite Antriebskoben, der mittlere der drei Antriebskolben, auf der ersten Antriebsstange begrenzt axial verschieblich angeordnet ist.

Der dritte Antriebskolben hat auch bei dieser Doppelsitzventil-Bauart die Aufgabe, das als Sitzteller ausgebildete, abhängig angetriebene zweite Schließglied, in gleicher Weise und konstruktiv völlig identisch zum Doppelsitzventil mit einem Schieberkolben und einem Sitzteller, von seiner Sitzfläche in die zweite Teiloffenstellung T2 zu überführen. Der erste und der zweite Antriebskolben realisieren, in gleicher Weise und konstruktiv völlig identisch zum Doppelsitzventil mit einem Schieberkolben und einem Sitzteller, die volle Offenstellung H des Doppelsitzventils.

Der Unterschied zwischen den Antriebsvarianten für die beiden Doppelsitzventil-Bauarten besteht nun darin, dass ein zweites Fügemittel, beispielsweise ein zweiter Distanzring, das/der auf der dem ersten Antriebskolben abgewandten Seite des zweiten Antriebskolbens auf der ersten Antriebsstange angeordnet ist und die axial unverschiebliche Festlegung des zweiten Antriebskolbens auf der ersten Antriebsstange bewirkt, entfernt wird, sodass der zweite Antriebskolben nunmehr um das axiale Maß dieses zweiten Fügemittels auf der ersten Antriebsstange relativ verschieblich ist.

Die unverschiebliche Festlegung des ersten Antriebskolbens erfolgt mittels eines ersten Fügemittels, beispielsweise eines ersten Distanzringes, das/der auf der dem zweiten Antriebskolben abgewandten Seite des ersten Antriebskolbens und auf der ersten Antriebsstange angeordnet ist. Auf der dem jeweiligen Fügemittel abgewandten Seite des ersten und des zweiten Antriebskolbens stützen sich letztere gleichermaßen gegen ein zweites Anschlagmittel ab, beispielsweise einen Sicherungsring, welches/welcher zwischen den beiden Antriebskolben unverschieblich auf der ersten Antriebsstange angeordnet ist.

Durch den Ortswechsel der Fügemittel erhält der zweite Antriebskolben einen begrenzten translatorischen axialen Bewegungsfreiheitsgrad auf der ersten Antriebsstange, während der axiale translatorische Bewegungsfreiheitsgrad dem ersten Antriebskolben auf eben dieser ersten Antriebsstange genommen wird. Dies hat zur Konsequenz, dass die zwischen dem ersten und dem zweiten Antriebskolben nach wie vor bestehende Möglichkeit der axialen Spreizung nunmehr allein, bezogen auf das stationäre Antriebsgehäuse, vom ersten Antriebskolben und damit auch von der mit diesem fest verbundenen ersten Antriebsstange vollzogen wird. Dabei liegt der zweite Antriebskolben, durch den hindurch nunmehr die erste Antriebsstange begrenzt axial verschieblich ist, an dem stirnseitigen Ende der zweiten Antriebsstange an.

Die erste Teiloffenstellung T1 des ersten Schließgliedes, das in diesem Falle als Sitzteller ausgebildet ist, die ursächlich aus der Spreizbewegung des ersten und des zweiten Antriebskolbens resultiert, wird begrenzt durch ein erstes Anschlagmittel, beispielsweise ein Anschlagring, welches/welcher auf der ersten Antriebsstange festgelegt ist und an der dem ersten Antriebskolben abgewandten Seite des zweiten Antriebskolbens zur Anlage kommt.

Absolute Identität der Antriebsvarianten für die beiden Doppelsitzventil-Bauarten ergibt sich, wie dies eine vorteilhafte Ausführungsform der vorgeschlagenen Vorrichtung vorsieht, wenn das erste und das zweite Fügemittel in Form eines einzigen Fügemittels ausgebildet sind. Um unter diesen Bedingungen die in der Regel axial unterschiedlichen ersten Teilhübe T1 der beiden Doppelsitzventil-Bauarten sicherzustellen, weist der zweite Antriebskolben an seiner einen Stirnfläche einen konzentrischen ringförmigen Vorsprung und an seiner anderen Stirnfläche eine konzentrische Ausnehmung auf, wobei der Vorsprung und die Ausnehmung jeweils so bemessen sind, dass der Vorsprung an einem stirnseitigen Ende der zweiten Antriebsstange zur Anlage kommt oder dass, bei einer umgekehrten Einbaulage des zweiten Antriebskolbens, die Ausnehmung das stirnseitige Ende der zweiten Antriebsstange aufnimmt. Das einzige Fügemittel wird dabei vorteilhaft als Distanzring ausgebildet.

Bei dieser Ausgestaltung der erfindungsgemäßen Vorrichtung ist es nunmehr möglich, durch Ortswechsel eines einzigen Bauteiles (Distanzring), bei sonst unveränderter Anzahl und Form der die Antriebsvorrichtung bildenden Teile, sowohl einen Antrieb für ein Doppelsitzventil zu generieren, bei dem das unabhängig angetriebene erste Schließglied als Schieberkolben und das abhängig angetriebene zweite Schließglied als Sitzteller ausgebildet sind (Öffnungshub H und erster Teilhub T1 sind gegensinnig), als auch eine Antriebsvorrichtung zu bilden, die ein Doppelsitzventil betätigen kann, das mit zwei Sitztellern ausgestattet ist und die vorstehend beschriebene Hubkinematik aufweist, wobei das als Sitzteller ausgebildete erste Schließglied nunmehr, um in die zugeordnete erste Teiloffenstellung T1 überführt zu werden, gleichsinnig zum Öffnungshub H verschoben werden muss.

Dieser erhebliche Vorteil wird hauptsächlich dadurch erreicht, dass gegenüber der vorstehend beschriebenen bekannten, gattungsgemäßen Vorrichtung (EP 0 866 934 B1) nunmehr die Lagerung des zweiten (mittleren) Antriebskolbens auf der ersten Antriebsstange des ersten Schließgliedes erfolgt. Diese Lagerung wird erst dadurch möglich, dass die als Hohlstange ausgebildete zweite Antriebsstange des zweiten Schließgliedes nur bis kurz oberhalb des dritten (unteren) Antriebskolbens reicht, wobei die das zweite Schließglied in seinen Sitz drückende, untere Feder im Wesentlichen unterhalb der Vorrichtung, in jedem Falle unterhalb des zweiten (mittleren) Antriebskolbens angeordnet ist.

Bei der vorstehend beschriebenen ersten und zweiten Ausführungsform der erfindungsgemäßen Vorrichtung weist der erste Druckmittelraum an dem Gehäuse einen ersten Druckmittelanschluss auf, über den der erste Druckmittelraum mit einem ersten Druckmittelstrom beaufschlagbar ist. In diesem Falle ist weiterhin vorgesehen, dass der zweite Druckmittelraum, ausgehend von einem zweiten Druckmittelanschluss, über eine in der ersten Antriebsstange ausgebildete Druckmittelbohrung, die sich in mindestens eine Querbohrung verzweigt, mit einem zweiten Druckmittelstrom beaufschlagbar ist.

Die Erfindung schlägt weiterhin im Rahmen der ersten und der zweiten Ausführungsform der Vorrichtung eine vorteilhafte Ausgestaltung vor, bei der der erste Druckmittelraum zwischen dem ersten und dem zweiten Antriebskolben einerseits und dem dritten Antriebskolben andererseits über die in der ersten Antriebsstange angeordnete Druckmittelbohrung, die sich in mindestens eine zweite Querbohrung verzweigt, mit einem modifizierten ersten Druckmittelstrom versorgt wird. Damit wird auf diesem Weg nunmehr die volle Offenstellung H betrieben.

Die Druckmittelzufuhr zum zweiten Druckmittelraum zwischen dem ersten und dem zweiten Antriebskolben, die den ersten Teilhub T1 für das erste Schließglied bewirkt, erfolgt im Rahmen der vorgenannten Ausgestaltung über einen am Gehäuse der Vorrichtung angeordneten modifizierten zweiten Druckmittelanschluss. Letzterer mündet in einen Ringraum ein, der sich axial zwischen der Mantelfläche des Gehäuses der Antriebsvorrichtung und einer Umfangsfläche des radial verjüngten ersten Antriebskolbens erstreckt und der in der unteren Endlage des ersten Antriebskolbens mindestens eine axiale Erstreckung aufweist, die dem vollen Öffnungshub H des Doppelsitzventils entspricht. Der Ringraum setzt sich innerhalb des ersten Antriebskolbens in einer Zufuhrbohrung fort, die in den zweiten Druckmittelraum ausmündet.

Im Zusammenhang mit den erfindungsgemäßen Vorrichtungen, mit denen die Hubkinematik eines Doppelsitzventils realisiert wird, das als unabhängig bewegbares erstes Schließglied einen Schieberkolben und als abhängig bewegbares zweites Schließglied einen Sitzteller aufweist, wird weiterhin vorgeschlagen, die Rückstellkraft des Schieberkolbens aus der ersten Teiloffenstellung T1 dadurch zu vergrößern, dass der diesbezügliche Teilhub gegen eine durch die Hauptfeder generierte Federkraft ausgeführt wird. Da die Hauptfeder in der Regel als Federpaket ausgebildet ist, umfasst eine im Zuge der ersten Teiloffenstellung T1 mit der ersten Antriebsstange im Eingriff stehende Mitnehmerhülse wenigstens eine innere Feder des Federpakets und drückt diese gegen den sich nach unten am Gehäuse der Vorrichtung abstützenden ersten Antriebskolben. Die dadurch zusätzlich generierte Rückstellkraft bringt den Schieberkolben schneller in seine Ruhelage. Diese Maßnahme wirkt sich insbesondere dann vorteilhaft aus, wenn über längere Betriebszeiten der erfindungsgemäßen Vorrichtung und des Doppelsitzventils die vorhandenen Dichtungen quellen und dadurch ggf. größere Reibungskräfte entstehen, die zu überwinden sind.

### KURZE BESCHREIBUNG DER ZEICHNUNGEN

Vier Ausführungsbeispiele der vorgeschlagenen Vorrichtung zum Antrieb eines Doppelsitzventils gemäß der Erfindung sind in der Zeichnung dargestellt und werden nachfolgend nach Aufbau und Funktion beschrieben. Es zeigen
- **Figur 1**: im Schnitt in einer ersten Ausführungsform die erfindungsgemäße Vorrichtung zum Antrieb eines Doppelsitzventils in Verbindung mit diesem Doppelsitzventil, das ein als Schieberkolben und ein als Sitzteller ausgebildetes Schließglied besitzt, wobei sich das Doppelsitzventil in seiner Schließstellung befindet;
- **Figur 1a**: in vergrößerter Darstellung eine in **Figur 1** mit **"X"** gekennzeichnete ausschnittsweise Darstellung der Vorrichtung;
- **Figur 1b**: in vergrößerter Darstellung einen in **Figur 1** mit **"Y"** gekennzeichneten Ausschnitt des Doppelsitzventils im Bereich seiner beiden Schließglieder;
- **Figur 2**: im Schnitt die Vorrichtung und das Doppelsitzventil gemäß **Figur 1****,** wobei die Vorrichtung das Doppelsitzventil in seine Offenstellung überführt hat;
- **Figur 2a**: in vergrößerter Darstellung eine in **Figur 2** mit **"X"** gekennzeichnete ausschnittsweise Darstellung der Vorrichtung;
- **Figur 2b**: in vergrößerter Darstellung eine in **Figur 2** mit **"Y"** gekennzeichnete ausschnittsweise Darstellung des Doppelsitzventils im Bereich seiner in der Offenstellung befindlichen Schließglieder;
- **Figur 3**: im Schnitt die Vorrichtung und das Doppelsitzventil gemäß **Figur 1****,** wobei sich das abhängig angetriebene, oben liegende zweite Schließglied in seiner Sitzreinigungsstellung befindet;
- **Figur 3a**: in vergrößerter Darstellung eine in **Figur 3** mit **"X"** gekennzeichnete ausschnittsweise Darstellung der Vorrichtung;
- **Figur 3b**: in vergrößerter Darstellung eine in **Figur 3** mit **"Y"** gekennzeichnete ausschnittsweise Darstellung des Doppelsitzventils im Bereich der beiden Schließglieder;
- **Figur 4**: im Schnitt die Vorrichtung und das Doppelsitzventil gemäß **Figur 1****,** wobei sich das unabhängig angetriebene, unten liegende erste Schließglied in seiner Sitzreinigungsstellung befindet;
- **Figur 4a**: in vergrößerter Darstellung eine in **Figur 4** mit **"X"** gekennzeichnete ausschnittsweise Darstellung der Vorrichtung;
- **Figur 4b**: in vergrößerter Darstellung eine in **Figur 4** mit **"Y"** gekennzeichnete ausschnittsweise Darstellung des Doppelsitzventils im Bereich seiner beiden Schließglieder, wobei in dieser Sitzreinigungsstellung des Schieberkolbens die dem ersten Ventilgehäuseteil benachbarte erste Sitzdichtung spaltweit von der zylindrischen Sitzfläche entfernt ist und die zweite Sitzdichtung in der zylindrischen Sitzfläche verbleibt;
- **Figur 5**: im Schnitt eine erste vorteilhafte Ausgestaltung der ersten Ausführungsform der erfindungsgemäßen Vorrichtung gemäß **Figur 1** im Bereich der Hauptfeder und der diese durchdringenden ersten Antriebsstange;
- **Figur 6**: im Schnitt eine zweite vorteilhafte Ausgestaltung der ersten Ausführungsform der erfindungsgemäßen Vorrichtung zum Antrieb eines Doppelsitzventils, das ein als Schieberkolben und ein als Sitzteller ausgebildetes Schließglied besitzt, wobei die Zufuhr des Druckmittels zum zweiten Druckmittelraum über einen Anschluss am Gehäuse der Vorrichtung in Verbindung mit einem Ringraum und einer Zufuhrbohrung im ersten Antriebskolben erfolgt und
- **Figur 7**: im Schnitt eine zweite Ausführungsform der erfindungsgemäßen Vorrichtung auf der Grundlage der Vorrichtung gemäß **Figur 6****,** wobei sich die Vorrichtungen der **Figuren 6** und **7** lediglich durch die Position eines einzigen Fügemittels (Distanzring) voneinander unterscheiden und mit der Vorrichtung gemäß **Figur 7** die Hubkinematik eines Doppelsitzventils realisiert wird, das zwei als Sitzteller ausgebildete Schließglieder aufweist.

### DETAILLIERTE BESCHREIBUNG

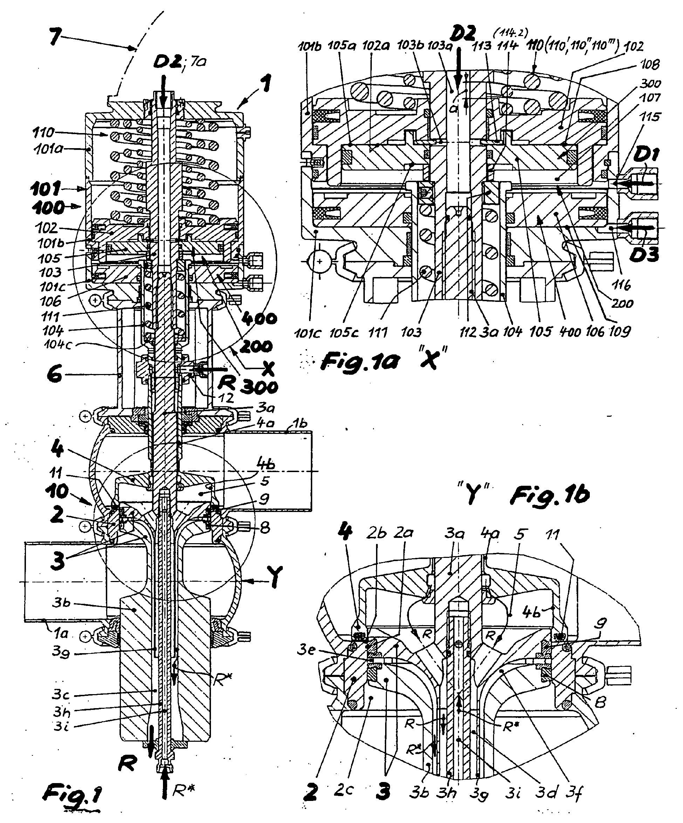

Eine vorgeschlagene Vorrichtung 100 **(****Figuren 1,1a,1b****)** dient dem Antrieb eines Doppelsitzventils 1, das im Wesentlichen aus einem Ventilgehäuse 10 mit einem ersten und einem zweiten Ventilgehäuseteil 1a bzw. 1b, zwei unabhängig voneinander bewegbaren Schließgliedern 3 und 4 mit jeweils zugeordneten Verstellstangen 3a bzw. 4a, einem Sitzring 2, der über eine innenseitige Verbindungsöffnung 2c eine Verbindung zwischen den Ventilgehäuseteilen 1a, 1b herstellt, einem das zweite Ventilgehäuseteil 1b mit der Vorrichtung 100 verbindenden Laternengehäuse 6 sowie einer Steuereinrichtung 7 besteht, wobei letztere auf der dem Doppelsitzventil 1 abgewandten Seite der Vorrichtung 100 angeordnet ist.

Das erste, als Schieberkolben ausgebildetes Schließglied 3 (aktives Schließglied) findet in der Schließstellung des Doppelsitzventils 1 in einer von der Verbindungsöffnung 2c gebildeten ersten Sitzfläche 2a, die als zylindrischen Sitzfläche ausgeführt ist, dichtend Aufnahme. Hierzu sind an einem Endabschnitt des Schieber kolbens 3, bezogen auf seine Längsachse, zwei axial beabstandete, radial wirkende Sitzdichtungen 8 und 9, vorgesehen. Das zweite, als Sitzteller ausgebildete Schließglied 4 wirkt in der Schließstellung des Doppelsitzventils 1 mit einer zweiten Sitzfläche 2b zusammen, gegenüber der es über eine dritte, axial wirkende Sitzdichtung 11 abgedichtet ist. Die beiden Schließglieder 3 und 4 bilden sowohl in der dargestellten Schließ- als auch in der Offenstellung zwischen sich einen Leckagehohlraum 5, der über eine in einem rohrförmigen Druckausgleichkolben 3b des Schieberkolbens 3 angeordnete Ablaufbohrung 3c mit der Umgebung des Doppelsitzventils 1 verbunden ist.

Der Schieberkolben 4 ist mit der ersten Verstellstange 3a verbunden, die nach oben aus dem zweiten Ventilgehäuseteil 1b heraus- und zur Vorrichtung 100 geführt ist. Sie wird von der rohrförmigen zweiten Verstellstange 4a konzentrisch umschlossen, die einerseits mit dem zweiten Schließglied 4 verbunden und andererseits ebenfalls zur Vorrichtung 100 geführt ist. Letztere verfügt über eine Hauptverstelleinrichtung 200, mit der das Doppelsitzventil 1 in eine volle Offenstellung H verbracht werden kann. Zum Zwecke der Öffnung des Doppelsitzventils 1 wird der Schieberkolben 3 in eine im Wesentlichen zylindrische Ausnehmung 4b des zweiten Schließgliedes 4 hineingefahren, kommt an letzterem zur Anlage und überführt es bei seiner weiteren Öffnungsbewegung gleichfalls in die Offenstellung. Die Überführung der Schließglieder 3, 4 in die jeweilige Schließstellung des Doppelsitzventils 1 erfolgt sinngemäß in umgekehrter Reihenfolge.

Zum Zwecke des spaltweiten Anhebens der Schließglieder 3 und 4 von ihrer jeweiligen Sitzfläche 2a bzw. 2b sind in der Vorrichtung 100 zwei Einzelverstelleinrichtungen 300, 400 vorgesehen, die zum einen an einer mit der ersten Ventilstange 3a verbundenen ersten Antriebsstange 103 und zum anderen an einer mit der zweiten Verstellstange 4a verbundenen, ebenso wie diese als Hohlstange ausgeführten zweiten Antriebsstange 104 angreifen.

Die **Figuren 1** und **1b** zeigen die beiden axial beabstandeten Sitzdichtungen 8 und 9, zwischen denen im Schieberkolben 3 Durchlassöffnungen 3e vorgesehen sind, die die mantelflächenseitige Umgebung des Schieberkolbens 3 mit einem zweiten Durchlasskanal 3f verbinden, der unterhalb in die Ablaufbohrung 3c ausmündet. In der dargestellten Lage dichten die beiden Sitzdichtungen 8 und 9 in der zylindrischen Sitzfläche 2a, während die im Sitzteller 4 vorgesehene dritte Sitzdichtung 11 gegen die zweite Sitzfläche 2b abgedichtet ist. Im zweiten Schließglied 4 befindet sich die im Wesentlichen zylindrische Ausnehmung 4b, deren Umfangswand konzentrisch zur zylindrischen Sitzfläche 2a ausgeführt ist. Der Innendurchmesser der Ausnehmung 4b kann dabei gleich oder größer als der Durchmesser der Sitzfläche 2a ausgeführt sein.

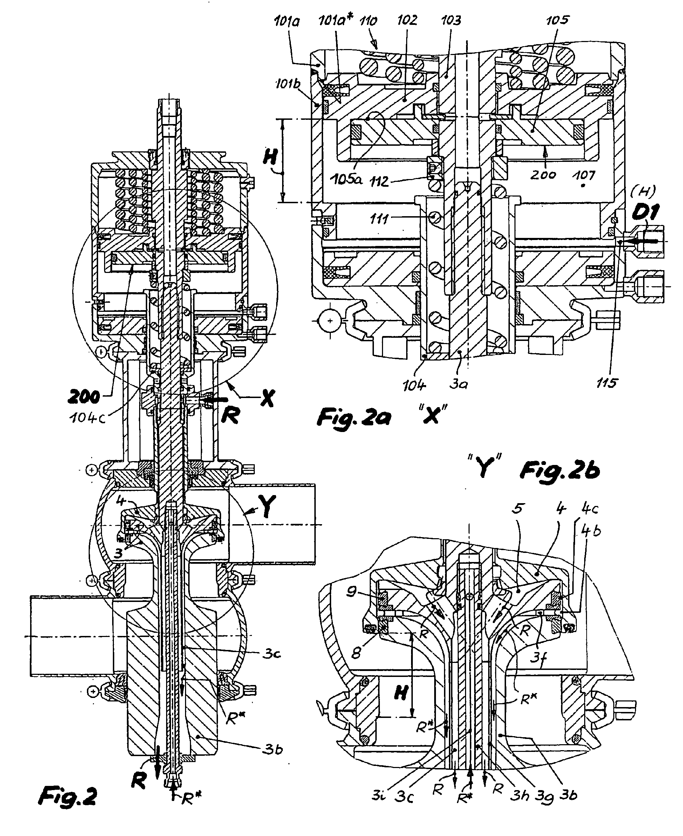

**Die** **Figuren 2 und 2b** zeigen die Offenstellung des Doppelsitzventils 1. Der Schieberkolben 3 findet mit den beiden Sitzdichtungen 8, 9 seines Endabschnitts in der Ausnehmung 4b des zweiten Schließgliedes 4 Aufnahme. Aus **Figur 2b** ist ersichtlich, dass die radiale Erstreckung der Umfangswand der Ausnehmung 4b in ihrem die zweite Sitzdichtung 9 umfassenden Bereich derart bemessen ist, dass zwischen der Sitzdichtung 9 und dieser Umfangswand ein flüssigkeitsdurchlässiger Umfangsringspalt 4c gebildet wird. Die erste Sitzdichtung 8 dichtet dabei an dem die Ausnehmung 4b umgebenden Ende ab.

Der Umfangsringspalt 4c zwischen der zweiten Sitzdichtung 9 und der Umfangswand der Ausnehmung 4b ermöglicht eine Spülung und Reinigung dieser zweiten Sitzdichtung 9 sowie des Umfangsringspaltes 4c selbst. Hierzu wird dem Umfangsringspalt 4c ein zweites Reinigungsmittel R* von außerhalb des Doppelsitzventils 1 über eine zentrische Zuführbohrung 3i innerhalb eines von unten in die Ablaufbohrung 3c eingeführten zweiten Rohres 3h zugeführt. Das zweite Reinigungsmittel R* gelangt über einen nicht dargestellten Verbindungsweg in den zweiten Durchlasskanal 3f im Bereich der Durchlassöffnungen 3e, um dann über den sich zwischen einem ersten Rohr 3g und der Ablaufbohrung 3c fortsetzenden zweiten Durchlasskanal 3f in die Umgebung auszutreten.

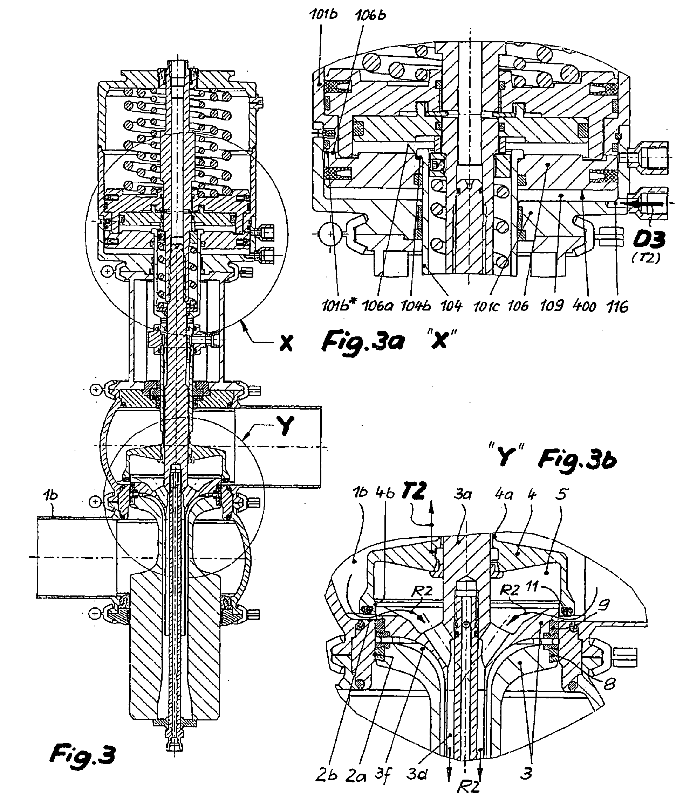

Bei der Sitzreinigung des zweiten Schließgliedes 4 (**Figuren 3** und **3b**) wird dessen dritte Sitzdichtung 11 spaltweit von seiner zugeordneten zweiten Sitzfläche 2b entfernt. Dies erfolgt dadurch, dass das zweite Schließglied 4 in Richtung seines zugeordneten Ventilgehäuseteils 1b um einen zweiten Teilhub T2 verschoben wird. Der Schieberkolben 3 verbleibt mit seinen beiden Sitzdichtungen 8 und 9 in seiner Schließlage in der zylindrischen Sitzfläche 2a. Eine zweite Sitzreinigungsströmung R2 kann nun über die freigelegte zweite Sitzfläche 2b in den Leckagehohlraum 5 einströmen. Die Begrenzung der zweiten Sitzreinigungsströmung R2 erfolgt über einen sogenannten Drosselringspalt zwischen der Ausnehmung 4b und einem nicht bezeichneten, im wesentlichen zylindrischen Ansatz, der am Ende des ersten Schließgliedes 3 vorgesehen ist und ein Stück weit in die Ausnehmung 4b hineinreicht.

Falls die zweite Sitzdichtung 9 einen Defekt aufweist, gelangt ggf. ein Teil der über diesen Defekt hindurchtretenden Sitzreinigungsströmung R2 über die Durchlassöffnungen 3e unmittelbar in den sich anschließenden zweiten Durchlasskanal 3f, um von dort, ebenfalls ohne Druckbeaufschlagung der ersten Sitzdichtung 8, über die nachfolgende Ablaufbohrung 3c in die Umgebung des Doppelsitzventils 1 abgeführt zu werden.

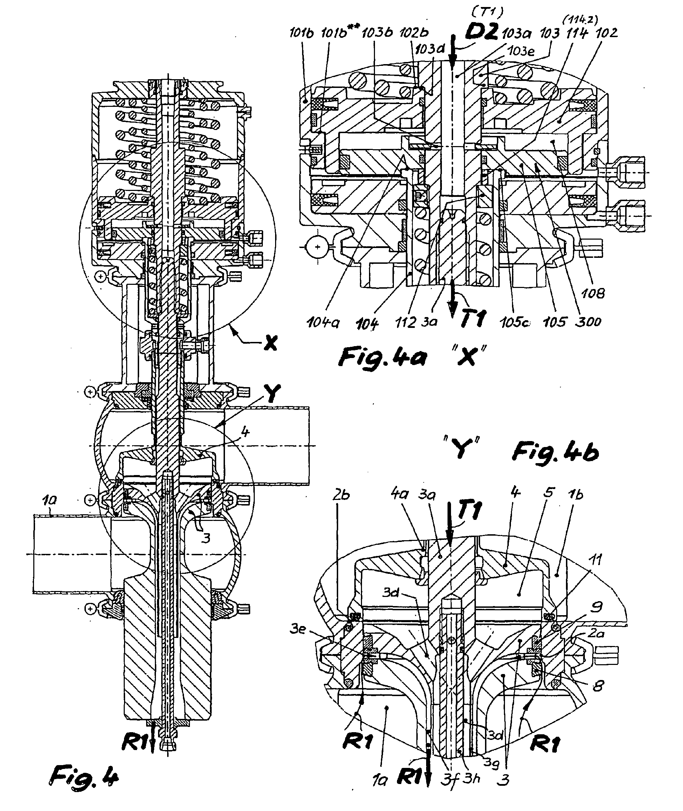

Bei der Sitzreinigung des Schieberkolbens 3 (**Figuren 4** und **4b**) wird dieser um einen ersten Teilhub T1 in Richtung des zugeordneten Ventilgehäuseteils 1 a, d.h. entgegen seiner regulären Öffnungsbewegung H, verschoben, sodass die erste Sitzdichtung 8 nicht mehr im Eingriff mit der zylindrischen Sitzfläche 2a steht. Eine erste Sitzreinigungsströmung R1 gelangt nun über die freigelegte Sitzfläche 2a und anschließend über die Durchlassöffnungen 3e in den zweiten Durchlasskanal 3f, um von dort, wiederum über die nachfolgende Ablaufbohrung 3c, in die Umgebung des Doppelsitzventils 1 abzufließen. Die Begrenzung der ersten Sitzreinigungsströmung R1 erfolgt über einen sogenannten Drosselringspalt zwischen der ersten zylindrischen Sitzfläche 2a und einem nicht bezeichneten, im wesentlichen zylindrischen Ansatz am Schieberkolben 3, der zwischen der ersten Sitzdichtung 8 und den Durchlassöffnungen 3e vorgesehen ist. Die Begrenzung der Reinigungsmittelmenge R1, R2 wird alternativ auch dadurch erreicht, dass die jeweilige Teiloffenstellung T1, T2 nicht stationär, sondern oszillierend generiert wird.

Zwischen der ersten Sitzreinigungsströmung R1 und dem Innenraum des zweiten Ventilgehäuseteils 1b, in dem ggf. Produkt anstehen kann, befindet sich in der dargestellten Sitzreinigungsstellung gemäß **Figur 4b** eine doppelte Abdichtung, gegeben durch die zweite Sitzdichtung 9 im Schieberkolben 3 und die dritte Sitzdichtung 11 im zweiten Schließglied 4. Für den Fall, dass die zweite Sitzdichtung 9 einen Defekt aufweist, kann ggf. ein Teil der Sitzreinigungsströmung R1 diese defekte Abdichtungsstelle zum zweiten Schließglied 4 hin passieren, wo sie dann über den Leckagehohlraum 5 und einen sich dort an letzteren anschließenden ersten Durchlasskanal 3d im Schieberkolben 3 und wiederum über die nachfolgende Ablaufbohrung 3c problemlos drucklos in die Umgebung abgeführt wird. Dieser erste Durchlasskanal 3d setzt sich über den Ringraum zwischen dem ersten und dem zweiten Rohr 3g, 3h fort und mündet weiter unterhalb in die Ablaufbohrung 3c aus (s. auch **Figur 1**). Eine Beaufschlagung der dritten Sitzdichtung 11 unter Druck durch die vorgenannte Sitzreinigungsströmung R1 ist damit ausgeschlossen.

Der umgekehrte Fall, dass die dritte Sitzdichtung 11 defekt ist und ggf. Produkt durch diese Abdichtungsstelle hindurchtritt, führt lediglich dazu, dass der Leckagehohlraum 5 seine ihm zugedachte Funktion wahrnimmt und diese Leckage drucklos über den ersten Durchlasskanal 3d abführt. Eine Vermischung zwischen Produkt und Reinigungsmittel ist praktisch ausgeschlossen, da sich diese Situation nur ergäbe, wenn die beiden in Frage kommenden Sitzdichtungen 9 und 11 gleichzeitig defekt und außerdem ein druckloser Abfluss der ersten Sitzreinigungsströmung R1 oder des Produktes nicht sichergestellt wäre. Dies kann aufgrund der Dimensionierungsfreiheit für die Durchtrittsquerschnitte der Durchlassöffnungen 3e und des ersten Durchlasskanals 3d mit Sicherheit ausgeschlossen werden.

Sowohl in der Schließ- als auch in der Offenstellung des Doppelsitzventils 1 (siehe neben den **Figuren 1** und **1b** auch die **Figuren 2** und **2b****)** können der Leckagehohlraum 5 sowie die strömungsmäßig beaufschlagbaren angrenzenden Bauteile mittels eines Reinigungsmittels R, das über einen im Bereich des Latemengehäuses 6 an der zweiten Verstellstange 4a angeordneten Reinigungsmittelanschluss 12 vorzugsweise einem nicht näher bezeichneten Ringkanal zwischen der ersten und der zweiten Verstellstange 3a, 4a zugeführt wird, gereinigt werden. Die Abfuhr des derart "extern" zugeführten Reinigungsmittels R aus dem Leckagehohlraum 5 erfolgt dabei, wie vorstehend bereits dargestellt, über den ersten Durchlasskanal 3d zwischen den konzentrisch ineinander angeordneten Rohren 3g und 3h, die wiederum konzentrisch innerhalb der Ablaufbohrung 3c des rohrförmigen, durch das erste Ventilgehäuseteil 1a hindurch- und aus diesem herausgeführten Druckausgleichkolbens 3b angeordnet sind.

Zu der Hauptverstelleinrichtung 200 zur Realisierung des vollen Öffnungshubes H gehören im Wesentlichen ein erstes und ein zweites Gehäuseteil 101 a, 101b (s. **Figuren 1****,1a),** die den oberen Teil eines Gehäuses 101 der Vorrichtung 100 bilden, eine Kolbenanordnung, bestehend aus einem ersten Antriebskolben 102 und ein zweiter Antriebskolben 105, wobei letzterer an seinem äußeren Umfang in einer auf der Unterseite des ersten Antriebskolbens 102 vorgesehenen zylindrischen Ausnehmung 102a dichtend und begrenzt axial verschieblich Aufnahme findet und innenseits auf der ersten Antriebsstange 103 axial unverschieblich festgelegt ist. Seine axiale Festlegung auf der ersten Antriebsstange 103 wird zwischen einem unterhalb des ersten Antriebskolbens 102 auf der ersten Antriebsstange 103 angeordneten zweiten Anschlagmittel 113, beispielsweise einem in die erste Antriebsstange 103 formschlüssig eingreifenden Sicherungsring 113, und einem unterhalb des zweiten Antriebskolbens 105 an der ersten Antriebsstange 103 festgelegten ersten Anschlagmittel 112, beispielsweise einem Anschlagring, realisiert, wobei zwischen letzterem und dem zweiten Antriebskolben 105 ein (zweites) Fügemittel D (114.2) 114 vorgesehen ist, beispielsweise ein (zweiter) Distanzring (114.2), 114. Bei der gemeinsamen Öffnungsbewegung des ersten und des zweiten Antriebskolbens 102, 105 liegt letzterer über eine siebte Anschlagfläche 105a an der stirnseitigen Fläche der zylindrischen Ausnehmung 102a an. Der erste Antriebskolben 102 ist, axial begrenzt verschieblich, auf der ersten Antriebsstange 103 dichtend gelagert, die ihrerseits mit der ersten Verstellstange 3a und damit dem ersten Schließglied 3 fest verbunden ist, und er ist außenseits mittels einer nicht näher bezeichneten Kolbendichtung im zweiten Gehäuseteil 101b dichtend geführt.

Der erste Antriebskolben 102 findet seine axiale Begrenzung nach oben (**Figur 4a**) über seine dortige stirnseitige Begrenzungsfläche, die als zwölfte Anschlagfläche 102b fungiert, an einer von einem Rezess 1 03e der ersten Antriebsstange 103 gebildeten dreizehnten Anschlagfläche 103d, und seine axiale Begrenzung nach unten durch Anschlag an einer dritten Anschlagfläche 101b** am zweiten Gehäuseteil 101b.

Unterhalb der Kolbenanordnung 102, 105 befindet sich in einem das Gehäuse 101 der Vorrichtung 100 nach unten schließenden dritten Gehäuseteil 101 c ein dritter Antriebskolben 106 (**Figuren 1, 1a**), der an seinem äußeren Umfang gegenüber dem dritten Gehäuseteil 101 c und an seinem inneren Umfang gegenüber der als Hohlstange ausgebildeten zweiten Antriebsstange 104, die mit der zweiten Verstellstange 4a und damit mit dem zweiten Schließglied 4 fest verbunden ist, jeweils über eine nicht näher bezeichnete Dichtung abgedichtet ist.

Zwischen der Kolbenanordnung 102, 105 einerseits, den miteinander verbundenen Gehäuseteilen 101b und 101c umfangsseits und dem dritten Arbeitskolben 106 andererseits wird ein erster Druckmittelraum 107 gebildet, der über einen ersten Druckmittelanschluss 115 mit einem ersten Druckmittelstrom D1 beaufschlagbar ist. Durch eine diesbezügliche Beaufschlagung wird die Hauptverstelleinrichtung 200 zur Erzeugung des vollen Öffnungshubes H betätigt (Figur 2 bis 2b), wie dies vorstehend bereits dargestellt wurde. Diese Öffnungsbewegung vollzieht sich gegen die Vorspannung einer den ersten Antriebskolben 102 von oben beaufschlagenden Hauptfeder 110, beispielsweise ein aus drei Federn 110', 110" und 110'" bestehendes Federpaket, die/das sich andererseits am Boden des ersten Gehäuseteils 101 a abstützt. In der Schließstellung des Doppelsitzventils 1 **(****Figur 1** bis **1b****)** wird die Vorspannkraft der Hauptfeder 110 bzw. des Federpakets 110 über den ersten Antriebskolben 102 und das zweite Anschlagmittel 113 auf die erste Antriebsstange 103 und damit auf die erste Verstellstange 3a übertragen, die das erste Schließglied 3 auf die zugeordnete erste Sitzfläche 2a presst.

Zwischen dem ersten Anschlagmittel (Anschlagring) 112 einerseits und, auf der Seite des Doppelsitzventils 1, einem inneren Rezess 104c innerhalb der als Hohlstange ausgebildeten zweiten Antriebsstange 104 andererseits ist eine zweite Feder 111 angeordnet **(****Fig. 1****),** die über ihre Vorspannkraft somit das zweite Schließglied 4 auf seine zugeordnete zweite Sitzfläche 2b presst. Im Zuge der Öffnungsbewegung wird das erste Schließglied 3 relativ zum zweiten Schließglied 4 verschoben und die Vorspannkraft der zweiten Feder 111 ist in jeder Stellung der beiden Schließglieder 3, 4 zueinander, in der letztere mittels der erstem Sitzdichtung 8 abgedichtet sein müssen, so ausreichend bemessen, dass der Leckagehohlraum 5 zur Umgebung hin hinreichend abgedichtet ist.

Die erste Einzelverstelleinrichtung 300 (**Figuren 1, 1a** und **4****, 4a**) besteht im Wesentlichen aus der Kolbenanordnung 102, 105 in Verbindung mit der in diesen jeweils unmittelbar abgedichteten ersten Antriebsstange 103. Ein zwischen dem ersten Antriebskolben 102 und dem zweiten Antriebskolben 105 gebildeter zweiter Druckmittelraum 108 ist über wenigstens eine Querbohrungen 103b, die aus einer Druckmittelbohrung 103a innerhalb der ersten Antriebsstange 103 ausmündet, mit einem im Bereich der Steuereinrichtung 7 angeordneten zweiten Druckmittelanschluss 7a verbunden, über den ein zweiter Druckmittelstrom D2 zur Erzeugung der ersten Teiloffenstellung T1 herangeführt bzw. abgeführt werden kann.

Zwischen dem dritten Gehäuseteil 101c und dem dritten Antriebskolben 106 wird ein dritter Druckmittelraum 109 gebildet (**Figuren 1, 1a** und **3****, 3a**), der über einen dritten Druckmittelanschluss 116 mit einem dritten Druckmittelstrom D3 beaufschlagt werden kann.

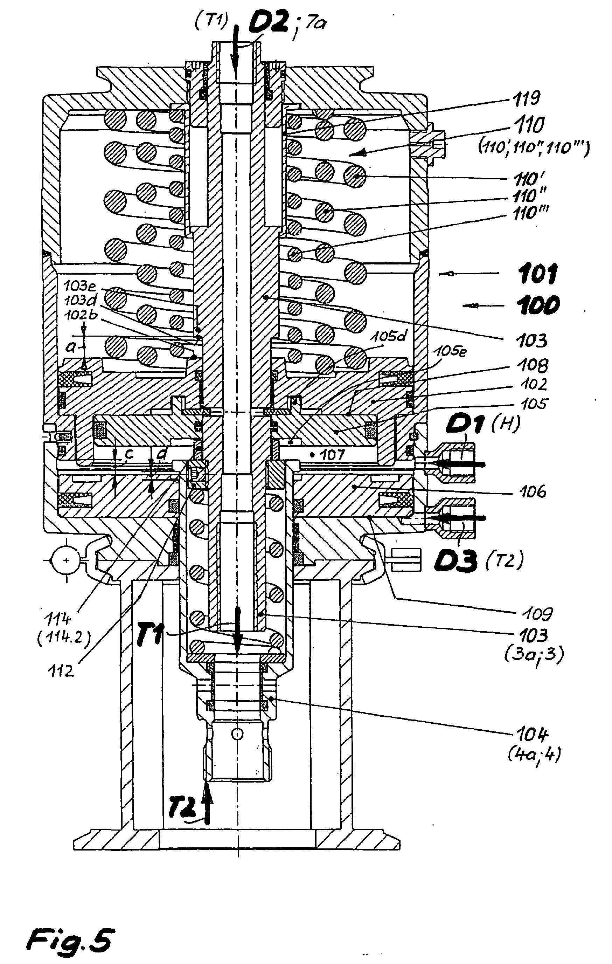

Die erste Teiloffenstellung T1 wird durch einen ersten Teihubweges a gebildet (T1 = a). Dieser ergibt sich aus dem Abstand zwischen der zwölften und der dreizehnten Anschlagfläche 102b bzw. 103d **(****Figur 4a** oder **Figur 5****).** Die zweite Teiloffenstellung T2 wird aus der Differenz eines zweiten und eines dritten Teilhubweges c bzw. d gebildet (T2 = c - d; **Figur 5****).** Dabei liegt der zweite Teilhubweg c zwischen einer zweiten und einer elften Anschlagfläche 101b* bzw. 106b **(****Figur 3a****).** Der dritte Teilhubweg d wird zwischen einer sechsten und einer zehnten Anschlagfläche 104b bzw. 106a **(****Figur 3a****)** gebildet.

In der Offenstellung des Doppelsitzventils (siehe **Figuren 2, 2a, 2b****)** erfolgt die Abdichtung der Schließglieder 3, 4 gegeneinander über die erste Sitzdichtung 8. Die Öffnungskraft der Hauptverstelleinrichtung 200 ergibt sich anteilig aus der wirksamen Kolbenfläche des ersten Antriebskolbens 102 und des in ihm angeordneten zweiten Antriebskolbens 105. Der volle Öffnungshub H wird nach oben begrenzt durch Anlage des ersten Antriebskolbens 102 an einer ersten Anschlagfläche 101a* am ersten Gehäuseteil 101 a. Die Vorspannkraft der zweiten Feder 111 stützt sich einerseits am ersten Anschlagmittel 112 und andererseits an dem inneren Rezess 104c der zweiten Antriebsstange 104 ab. Der Anteil an der Öffnungskraft, der vom zweiten Antriebskolben 105 generiert wird, wird über den ersten Antriebskolben 102 auf die erste Antriebsstange 103 übertragen.

Die zweite Einzelverstelleinrichtung 400 zur Erzeugung der Sitzreinigungsstellung des zweiten Schließgliedes 4 **(****Figur 3b****)** wird durch das dritte Gehäuseteil 101c und den dritten Antriebskolben 106 gebildet. Der dritte Druckmittelstrom D3 hat über den dritten Druckmittelanschluss 116 den dritten Druckmittelraum 109 beaufschlagt und dadurch den dritten Antriebskolben 106 nach oben verschoben. Die mit der zweiten Verstellstange 4a und damit mit dem zweiten Schließglied 4 fest verbundene zweite Antriebsstange 104 wurde durch den dritten Antriebskolben 106 in die zweite Teiloffenstellung T2 überführt. Bevor der dritte Antriebskolben 106 die zweite Anschlagfläche 101b* erreicht, gelangt er innenseits über die zehnte Anschlagfläche 106a an einem Vorsprung der zweiten Antriebsstange 104, der gegenüber dem dritten Antriebskolben 106 die sechste Anschlagfläche 104b bildet, zur Anlage, sodass sich aus der Differenz der Teilhubwege c und d die vorstehend bereits definierte zweite Teiloffenstellung mit T2 = c - d ergibt.

Für die erste Teiloffenstellung T1 = a ist die erste Einzelverstelleinrichtung 300 (**Figur 4a**) zuständig, die aus dem ersten und dem zweiten Antriebskolben 102, 105 mit dem zwischen beiden gebildeten zweiten Druckmittelraum 108 besteht. Wird letzterem über die in der ersten Antriebsstange 103 angeordnete Druckmittelbohrung 103a und die sich anschließenden Querbohrungen 103b der zweite Druckmittelstrom D2 zugeführt, dann kommt es zu einer axialen Spreizbewegung zwischen den beiden Kolben 102 und 105. Der erste Antriebskolben 102 verbleibt dabei unter der Wirkung der Hauptfeder 110 stationär an der am zweiten Gehäuseteil 101b gebildeten dritten Anschlagfläche 101b** und der zweite Antriebskolben 105 verschiebt die mit ihm fest verbundene erste Antriebsstange 103 um den Teilhub T1 = a so weit nach unten, bis die dreizehnte Anschlagfläche 103d, gebildet am Rezess 103e der ersten Antriebsstange 103, an der zwölften Anschlagfläche 102b des ersten Antriebskolbens 102 zur Anlage kommt. Gleichzeitig legt sich der zweite Antriebskolben 105 mit seiner neunten Anschlagfläche 105c auf das obere stirnseitige Ende der als Hohlstange ausgebildeten zweiten Antriebsstange 104, die fünfte Anschlagfläche 104a, und arretiert somit das zweite Schließglied 4 auf seiner zugeordneten zweiten Sitzfläche 2b.

Aus **Figur 4a** lässt sich bereits verdeutlichen, wie die Sitzreinigungsstellung eines unabhängig angetriebenen, unten liegenden, als Sitzteller ausgebildeten Schließgliedes 3 mit Hilfe der vorstehend beschriebenen Vorrichtung 100 bewerkstelligt werden kann, ohne dass die diese Vorrichtung 100 bildenden Bauteile geändert oder ergänzt werden müssen. Erfindungsgemäß entsteht durch Umordnung des Fügemittels (Distanzring 114 bzw. 114.2) in eine andere Lage die zweite Ausführungsform der erfindungsgemäßen Vorrichtung 100, sodass diese mit Blick auf den Antrieb der beiden grundsätzlichen Doppelsitzventil-Bauarten (Schieberkolben/Sitzteller oder Sitzteller/Sitzteller) bivalente Fähigkeiten besitzt.

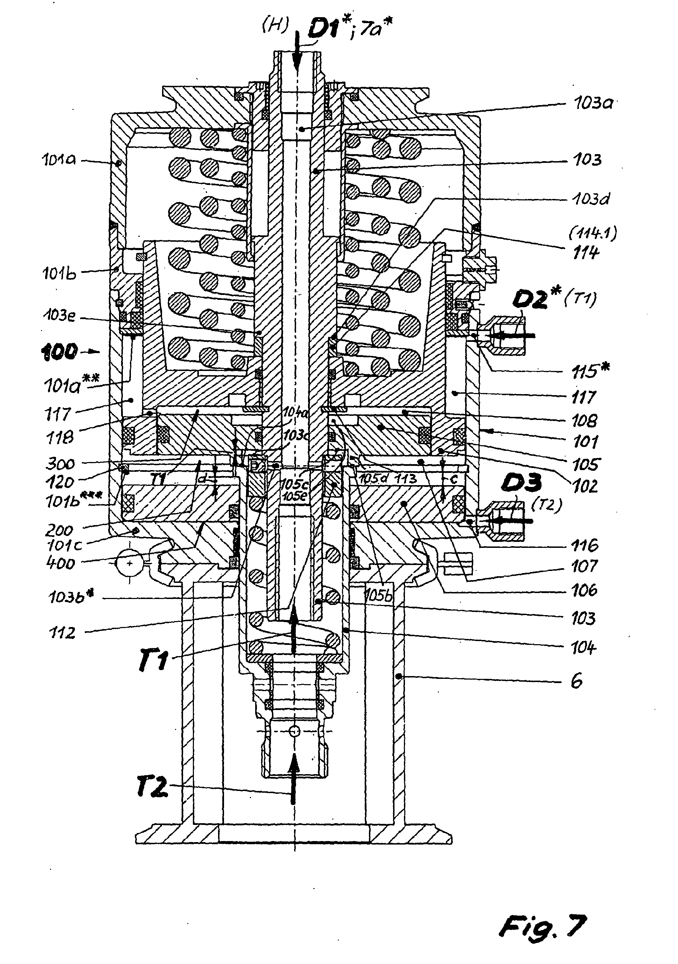

Um die Sitzreinigungsstellung des als Sitzteller ausgebildeten ersten Schließgliedes 3 sicherzustellen, muss dieses entgegen der in **Figur 4a** gekennzeichneten Orientierung der ersten Teiloffenstellung T1 nach oben verschoben werden können. Um der ersten Verstellstange 3a und damit der ersten Antriebsstange 103 einen diesbezüglichen Bewegungsfreiheitsgrad T1 nach oben zu verschaffen, wird das zweite Fügemittel 114.2 (zweiter Distanzring 114.2) entfernt. Dadurch erhält der zweite Antriebskolben 105 eine durch die axiale Abmessung des zweiten Fügemittels (114.2) determinierte, begrenzte axiale Verschieblichkeit auf der ersten Antriebsstange 103. Ein erstes Fügemittel 114.1, ein erster Distanzring 114.1), wird nunmehr zwischen dem ersten Antriebskolben 102 und der dreizehnten Anschlagfläche 103d, gebildet am Rezess 103e der ersten Antriebsstange 103, angeordnet **(****Figur 7****),** sodass jetzt der erste Antriebskolben 102 axial unverschieblich auf der ersten Antriebsstange 103 festgelegt ist.

Wird nun der zwischen dem ersten und dem zweiten Antriebskolben 102, 105 gebildete zweite Druckmittelraum 108 in der vorstehend beschriebenen Weise mit dem zweiten Druckmittelstrom D2 **(****Figur 4a****)** bzw. einem modifizierten zweiten Druckmittelstrom D2* **(****Figur 7****)** beaufschlagt, dann ergibt sich, wie vorstehend beschrieben, wiederum eine axiale Spreizbewegung zwischen den Antriebskolben 102, 105. Bevor der zweite Antriebskolben 105 an der neunten Anschlagfläche 105c seine untere endseitige Begrenzung an einer vierten Anschlagfläche 103c des Anschlagrings 112 findet, gelangt er zunächst über eine achte Anschlagfläche 105b an der fünften Anschlagfläche 104a zur Anlage. Da sich die zweite Antriebsstange 104 über das zweite Schließglied 4 auf der zugeordneten zweiten Sitzfläche 2b abstützt, kann der zweite Antriebskolben 105 keine weitere Verschiebebewegung nach unten ausführen. Die restliche, noch zur Verfügung stehende Spreizbewegung, die erste Teiloffenstellung T1, kann nunmehr allein vom ersten Antriebskolben 102 nach oben gegen die Kraft der Hauptfeder 110 vollzogen werden. Der erste Antriebskolben 102 findet seine obere Endlage und damit ist dann auch die erste Teiloffenstellung T1 erreicht, wenn der Anschlagring 112 mit seiner vierten Anschlagfläche 103c an der neunten Anschlagfläche 105c des Antriebskolben 105 von unten zur Anlage gelangt.

Die übrigen Schaltbewegungen bzw. die übrige Hubkinematik des Doppelsitzventils 1, nämlich der Öffnungshub H und die zweite Teiloffenstellung T2, sind beim Doppelsitzventil 1 mit zwei Sitztellern 3, 4 gleichermaßen identisch gegeben wie beim Doppelsitzventil 1 mit einem Schieberkolben 3 und einem Sitzteller 4. Diese Schaltbewegungen lassen sich mit der erfindungsgemäßen Vorrichtung nach wie vor ausführen, da die notwendige Hauptverstelleinrichtung 200 und die zweite Einzelverstelleinrichtung 400 durch die vorstehend beschriebene Umordnung des Distanzringes 114.1, 114.2 in ihrem Aufbau und in ihrer Funktion nicht verändert wurden.

Werden, wie dies vorgeschlagen wird, das erste und das zweite Fügemittel 114.1, 114.2 in Form eines einzigen Fügemittels 114 ausgebildet, dann sind die erste und die zweite Ausführungsform der erfindungsgemäßen Vorrichtung identisch hinsichtlich Anzahl und Formgestalt der notwendigen Bauteile aufgebaut. Die Anpassung der jeweiligen Ausführungsform an die jeweilige spezifische erste Teiloffenstellung T1 (axiale Unterschiede und unterschiedlicher Durchlaufsinn) erfolgt in diesem Falle über eine besondere Ausgestaltung der beiden Stirnseiten des zweiten Antriebskolbens 105, der zwei um 180 Grad unterschiedliche Einbaulagen innerhalb der zylindrischen Ausnehmung 102a des ersten Antriebskolbens einnehmen kann. Dabei weist der zweite Antriebskolben 105 an seiner einen Stirnfläche einen konzentrischen ringförmigen Vorsprung 105d und an seiner anderen Stirnfläche eine konzentrische Ausnehmung 105e auf, wobei der Vorsprung 105d und die Ausnehmung 105e jeweils so bemessen sind, dass ersterer an dem stirnseitigen Ende der zweiten Antriebsstange 104, der fünften Anschlagfläche 104a, zur Anlage kommt oder dass, bei einer umgekehrten Einbaulage des zweiten Antriebskolbens 105, die Ausnehmung 105e das stirnseitige Ende der zweiten Antriebsstange 104 aufnimmt.

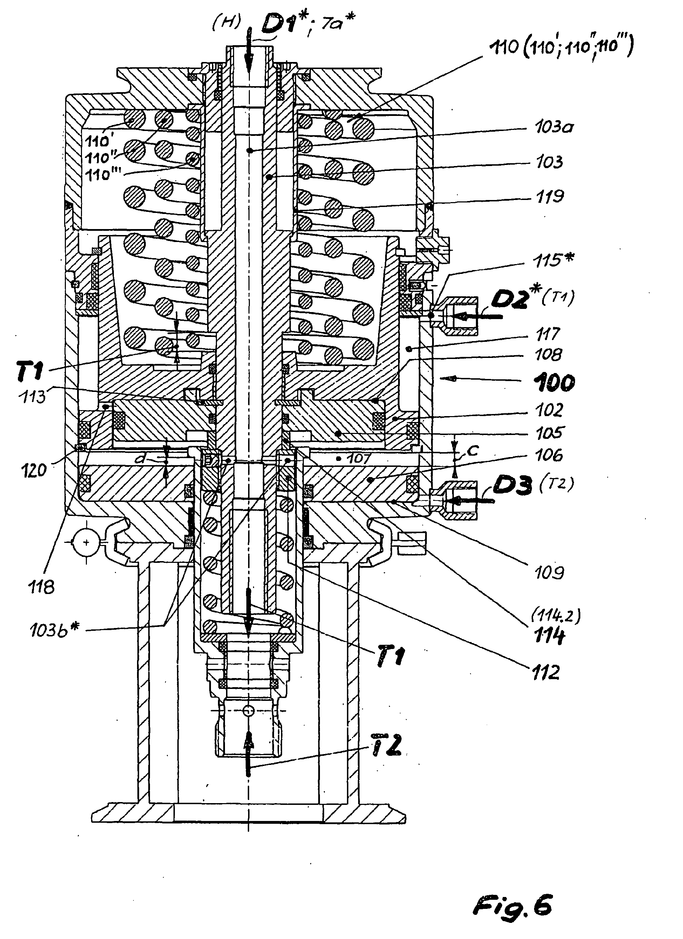

Bei der ersten und der zweiten Ausführungsform der erfindungsgemäßen Vorrichtung wird gemäß einer vorteilhaften Ausgestaltung **(****Figur 6** und **7****)** zur Erzeugung der vollen Offenstellung H ein zur Beaufschlagung des ersten Druckmittelraumes 107 notwendiger modifizierter erster Druckmittelstrom D1* über einen modifizierten ersten Druckmittelanschluss 7a* und die Druckmittelbohrung 103a innerhalb der ersten Antriebsstange 103 und wenigstens eine zweite Querbohrung 103b*, die in den Druckmittelraum 107 ausmündet, zugeführt.

Die Zufuhr des modifizierten zweiten Druckmittelstromes D2*, der die erste Teiloffenstellung T1 bewirkt, zum zweiten Druckmittelraum 108 erfolgt über einen modifizierten zweiten Druckmittelanschluss 115* am Gehäuse 101 der Vorrichtung 100. Von dort gelangt er über einen Ringraum 117, der sich zwischen einer inneren Mantelfläche des Gehäuses 101 und einer äußeren Mantelfläche des radial verjüngten ersten Antriebskolbens 102 axial erstreckt, und auf dem Weg über Zufuhrbohrungen 118 im ersten Antriebskolben 102 in den zweiten Druckmittelraum 108.

Der volle Öffnungshub H der Hauptverstelleinrichtung 200 wird durch eine modifizierte erste Anschlagfläche 101a** am Gehäuse 101 begrenzt. Die zweite Teiloffenstellung T2 wird durch eine modifizierte dritte Anschlagfläche 101b*** an einem im dritten Gehäuseteil 101c festgelegten zweiten Sicherungsring 120 begrenzt **(****Figur 7****).**

Um die Rückholkraft aus der ersten Teiloffenstellung T1 des als Schieberkolben ausgebildeten ersten Schließgliedes 3 zu erhöhen **(****Figuren 5** und **6****)** ist eine Mitnehmerhülse 119 vorgesehen, die an ihrem dem ersten Antriebskolben 102 zugewandten Ende an der ersten Antriebsstange 103 und damit der ersten Verstellstange 3a angreift und mit dieser einen Formschluss bei einer Verschiebung der ersten Antriebsstange 103 nach unten bewirkt und die an ihrem anderen Ende das Federpaket 110', 110", 110"', das die Hauptfeder 110 bildet, teilweise hintergreift. Im Ausführungsbeispiel wird die innere Feder 110"' von der Mitnehmerhülse 119 hintergriffen, sodass in der ersten Teiloffenstellung T1 durch diese innere Feder 110"' eine zusätzliche Rückstellkraft generiert wird. Es können auch zusätzlich noch die mittlere und ggf. auch noch im Bedarfsfall die äußere Feder 110" bzw. 110' mit einbezogen werden.

Die zweite Ausführungsform der erfindungsgemäßen Vorrichtung 100 (**Figur 7**) erlaubt eine begrenzte axiale Verschiebung der ersten Antriebsstange 103, den ersten Teilhub T1 (erste Teiloffenstellung T1), nach oben. Dies wird möglich durch Verlagerung des einzigen Distanzringes 114 aus der Position, die er in der ersten Ausführungsform gemäß den **Figuren 1** bis **6** einnimmt, in eine Position zwischen dem ersten Antriebskolben 102 und dem Rezess 103e. Im Gegenzug wird durch diese Verlagerung der erste Antriebskolben 102 auf der ersten Antriebsstange 103 festgelegt. Der volle Öffnungshub H und die zweite Teiloffenstellung T2 werden in gleicher Weise wie bei der ersten und der zweiten Ausführungsform realisiert.

### BEZUGSZEICHENLISTE DER VERWENDETEN ABKÜRZUNGEN

- 1: Doppelsitzventil
- 10: Ventilgehäuse
- 1a: erstes Ventilgehäuseteil
- 1 b: zweites Ventilgehäuseteil
- 2: Sitzring
- 2a: erste Sitzfläche (zylindrische Sitzfläche)
- 2b: zweite Sitzfläche
- 2c: Verbindungsöffnung
- 3: erstes Schließglied (Schieberkolben)
- 3a: erste Verstellstange
- 3b: Druckausgleichkolben
- 3c: Ablaufbohrung
- 3d: erster Durchlasskanal
- 3e: Durchlassöffnungen
- 3f: zweiter Durchlasskanal
- 3g: erstes Rohr
- 3h: zweites Rohr
- 3i: zentrische Zufuhrbohrung
- 4: zweites Schließglied (Sitzteller)
- 4a: zweite Verstellstange
- 4b: zylindrische Ausnehmung
- 4c: Umfangsringspalt
- 5: Leckagehohlraum
- 6: Laternengehäuse
- 7: Steuereinrichtung (nicht dargestellt)
- 7a: zweiter Druckmittelanschluss (Lift unten, T1)
- 7a*: modifizierter erster Druckmittelanschluss (Haupthub)
- 8: erste Sitzdichtung (radial)
- 9: zweite Sitzdichtung (radial)
- 11: dritte Sitzdichtung (axial)
- 12: Reinigungsmittelanschluss
- 100: Vorrichtung (Antriebsvorrichtung)
- 101: Gehäuse (Antriebsvorrichtung)
- 101a: erstes Gehäuseteil
- 101a*: erste Anschlagfläche
- 101a**: modifizierte erste Anschlagfläche
- 101b: zweites Gehäuseteil
- 101b*: zweite Anschlagfläche
- 101b**: dritte Anschlagfläche
- 101b***: modifizierte dritte Anschlagfläche
- 101c: drittes Gehäuseteil
- 102: erster Antriebskolben
- 102a: zylindrische Ausnehmung
- 102b: zwölfte Anschlagfläche
- 103: erste Antriebsstange
- 103a: Druckmittelbohrung
- 103b: Querbohrungen
- 103b*: zweite Querbohrungen
- 103c: vierte Anschlagfläche
- 103d: dreizehnte Anschlagfläche
- 103e: Rezess
- 104: zweite Antriebsstange
- 104a: fünfte Anschlagfläche
- 104b: sechste Anschlagfläche
- 104c: innerer Rezess
- 105: zweiter Antriebskolben
- 105a: siebte Anschlagfläche
- 105b: achte Anschlagfläche
- 105c: neunte Anschlagfläche
- 105d: konzentrischer ringförmiger Vorsprung
- 105e: konzentrische Ausnehmung
- 106: dritter Antriebskolben
- 106a: zehnte Anschlagfläche
- 106b: elfte Anschlagfläche
- 107: erster Druckmittelraum
- 108: zweiter Druckmittelraum
- 109: dritter Druckmittelraum
- 110: Hauptfeder (Federpaket)
- 110': äußere Feder
- 110": mittlere Feder
- 110"': innere Feder
- 111: zweite Feder
- 112: erstes Anschlagmittel (Anschlagring)
- 113: zweites Anschlagmittel (Sicherungsring)
- 114: Fügemittel (Distanzring)
- 114.1: erstes Fügemittel (erster Distanzring)
- 114.2: zweites Fügemittel (zweiter Distanzring)
- 115: erster Druckmittelanschluss (Haupthub)
- 115*: modifizierter zweiter Druckmittelanschluss (Lifthub unten, T1)
- 116: dritter Druckmittelanschluss (Lift oben, T2)
- 117: Ringraum
- 118: Zufuhrbohrung
- 119: Mitnehmerhülse
- 120: zweiter Sicherungsring
- 200: Hauptverstelleinrichtung
- 300: erste Einzelverstelleinrichtung
- 400: zweite Einzelverstelleinrichtung

- a: erster Teilhubweg
- c: zweiter Teilhubweg
- d: dritter Teilhubweg

- D1: erster Druckmittelstrom
- D1*: modifizierter erster Druckmittelstrom
- D2: zweiter Druckmittelstrom
- D2*: modifizierter zweiter Druckmittelstrom
- D3: dritter Druckmittelstrom
- H: voller Öffnungshub (volle Offenstellung)
- R: Reinigungsmittel
- R*: zweites Reinigungsmittel
- R1: erste Sitzreinigungsströmung
- R2: zweite Sitzreinigungsströmung
- T1: erste Teiloffenstellung (T1 = b - a)
- T2: zweite Teiloffenstellung (T2 = c - d)

## Patentansprüche

1. Vorrichtung (100) zum Antrieb eines Doppelsitzventils (1), das mit zwei unabhängig voneinander bewegbaren Schließgliedern (3, 4) versehen ist, die zwischen sich einen Leckagehohlraum (5) einschließen, der über wenigstens einen Verbindungsweg (3c) mit der Umgebung des Doppelsitzventils (1) verbunden ist,
und das mit dem unabhängig angetriebenen ersten Schließglied (3) versehen ist, das nach einem Teilhub an dem zweiten Schließglied (4) zur Anlage kommt und dieses bei seiner weiteren Öffnungsbewegung gleichfalls in eine volle Offenstellung (H) überführt,
und das mit teleskopartig ineinander fassenden, auf der Seite des zweiten Schließglieds (4) aus einem Ventilgehäuse (10) nach außen herausgeführten Verstellstangen (3a und 4a) versehen ist, über die die Schließglieder (3, 4), zusätzlich zu der vollen Offenstellung (H) und unabhängig voneinander, jeweils in eine Teiloffenstellung (T1, T2) verbringbar sind,
wobei, wenn die Vorrichtung (100) mit dem Doppelsitzventil (1) in Verbindung ist, die Verstellstange (3a, 4a) jeweils mit einer ersten (103) und einer zweiten (104) Antriebsstange in Verbindung steht,
wobei die volle Offenstellung (H) durch eine Hauptverstelleinrichtung (200) und die Teiloffenstellungen (T1, T2) durch den jeweiligen Schließgliedern (3, 4) zugeordnete Einzelverstelleinrichtungen (300, 400) erzeugt werden, die Einzelverstelleinrichtungen (300, 400) zum einen zwischen der Hauptverstelleinrichtung (200) und dem Ventilgehäuse (10) und zum andern zusammen mit der Hauptverstelleinrichtung (200) in einem gemeinsamen Gehäuse (101) angeordnet sind,
mit einem erstem Antriebskolben (102) der Hauptverstelleinrichtung (200) und einem zweiten Antriebskolben (105) der ersten Einzelverstelleinrichtung (300), die gemeinsam die volle Offenstellung (H) und die in einer gegenläufigen Spreizbewegung die erste Teiloffenstellung (T1) an der ersten Verstellstange (3a) des ersten Schließgliedes (3) ausführen, wobei der zweite Antriebskolben (105) in seiner Umfangsfläche dichtend vom ersten Antriebskolben (102) umfasst ist,
und mit einem dritten Antriebskolben (106) der zweiten Einzelverstelleinrichtung (400) für das zweite Schließglied (4), der in Richtung der zugeordneten zweiten Teiloffenstellung (T2) zum Eingriff in eine Mitnahmeverbindung mit der zweiten Antriebsstange (104) des zweiten Schließgliedes (4) verbringbar ist,
wobei zwischen den ersten und zweiten Antriebskolben (102, 105) einerseits und dem dritten Antriebskoben (106) andererseits ein erster Druckmittelraum (107) zur Erzeugung der vollen Offenstellung (H) angeordnet ist, zwischen dem ersten und dem zweiten Antriebskolben (102, 105) ein zweiter Druckmittelraum (108) zur Erzeugung der ersten Teiloffenstellung (T1) vorgesehen und auf der dem ersten Druckmittelraum (107) abgewandten Seite des dritten Antriebskolbens (106) ein dritter Druckmittelraum (109) zur Erzeugung der zweiten Teiloffenstellung (T2) angeordnet sind,
**dadurch gekennzeichnet**,
• dass der erste und der zweite Antriebskolben (102, 105) unmittelbar auf der ersten Antriebsstange (103) angeordnet sind, so dass die Vorrichtung in zwei Konfiguration einsetzbar ist, wobei
• entweder, in einer ersten Konfiguration der Vorrichtung der erste Antriebskolben (102) auf der ersten Antriebsstange (103) begrenzt axial verschieblich angeordnet und der zweite Antriebskolben (105) auf der ersten Antriebsstange (103) unverschieblich festgelegt sind, so dass die Vorrichtung zum Antrieb eines Doppelsitzventils mit einem ersten (3) als Schieberkolben ausgebildeten Schließglied und einem zweiten (4) als Sitzteller ausgebildeten Schließglied geeignet ist,
• oder, in einer zweiten Konfiguration der Vorrichtung, der erste Antriebskolben (102) auf der ersten Antriebsstange (103) unverschieblich festgelegt und der zweite Antriebskolben (105) auf der ersten Antriebsstange (103) begrenzt axial verschieblich angeordnet sind, so dass die Vorrichtung zum Antrieb eines Doppelsitzventils mit zwei als Sitzteller ausgebildeten Schließgliedern geeignet ist.

2. Kombination einer Vorrichtung nach Anspruch 1 und eines Doppelsitzventils mit einem ersten (3) als Schieberkolben ausgebildeten Schließglied und einem zweiten (4) als Sitzteller ausgebildeten Schließglied,
**dadurch gekennzeichnet,**
**dass** der Endabschnitt des als Schieberkolben ausgebildeten ersten Schließgliedes (3), bezogen auf seine Längsachse, zwei axial beabstandete radiale Sitzdichtungen (8 und 9) aufweist, zwischen denen im ersten Schließglied (3) Durchlassöffnungen (3e) vorgesehen sind, die die mantelflächenseitige Umgebung des ersten Schließgliedes (3) mit dem Leckagehohlraum (5) verbinden, dass beide Sitzdichtungen (8, 9) in der Schließstellung des Doppelsitzventils (1) in einer zylindrisch ausgebildeten ersten Sitzfläche (2a) dichtend Aufnahme finden und in der Offenstellung in eine mit letzterer fluchtende zylindrische Ausnehmung (4b) dichtend verbracht werden, und dass in der Sitzreinigungstellung des ersten Schließgliedes (3) dieses um einen Teilhub entgegen seiner Öffnungsbewegung dergestalt verschoben ist, dass die Durchlassöffnungen (3e) mit dem der freigelegten Sitzfläche (2a) benachbarten Ventilgehäuseteil (1 a) verbunden sind und dabei das leckagehohlraumseitige Dichtungsmittel (9) des ersten Schließgliedes (3) in der ersten Sitzfläche (2a) dichtend verbleibt.

3. Vorrichtung nach Anspruch 1 oder Kombination nach Anspruch 2,
**dadurch gekennzeichnet,**
**dass** die unverschiebliche Festlegung des ersten Antriebskolbens (102) mittels eines ersten Fügemittels (114.1) erfolgt, das auf der dem zweiten Antriebskolben (105) abgewandten Seite des ersten Antriebskolbens (102) auf der ersten Antriebsstange (103) angeordnet ist,
**dass** die unverschiebliche Festlegung des zweiten Antriebskolbens (105) mittels eines zweiten Fügemittels (114.2) erfolgt, das auf der dem ersten Antriebskolben (102) abgewandten Seite des zweiten Antriebskolbens (105) auf der ersten Antriebsstange (103) angeordnet ist,
und **dass** zwischen den beiden Antriebskolben (102,105) und auf der ersten Antriebsstange (103) ein auf dieser unverschieblich angeordnetes, beiden Antriebskolben (102, 105) gleichermaßen dienendes zweites Anschlagmittel (113) angeordnet ist.

4. Vorrichtung oder Kombination nach Anspruch 3,
**dadurch gekennzeichnet,**
**dass** das erste und das zweite Fügemittel (114.1, 114.2) in Form eines einzigen Fügemittels (114) ausgebildet sind,
und **dass** der zweite Antriebskolben (105) an seiner einen Stirnfläche einen konzentrischen ringförmigen Vorsprung (105d) und an seiner anderen Stirnfläche eine konzentrische Ausnehmung (105e) aufweist,
wobei der Vorsprung (105d) und die Ausnehmung (105e) jeweils so bemessen sind, dass der Vorsprung (105d) an einem stirnseitigen Ende (1 04a) der zweiten Antriebsstange (104) zur Anlage kommt oder dass, bei einer umgekehrten Einbaulage des zweiten Antriebskolbens (105), die Ausnehmung (105e) das stirnseitige Ende (104) der zweiten Antriebsstange (104) aufnimmt.

5. Vorrichtung oder Kombination nach Anspruch 4,
**dadurch gekennzeichnet,**
**dass** die Fügemittel (114; 114.1, 114.2) als Distanzringe ausgebildet sind.

6. Vorrichtung oder Kombination nach einem der Ansprüche 1 bis 5,
**dadurch gekennzeichnet,**
**dass** der erste Druckmittelraum (107) an dem Gehäuse (101) einen ersten Druckmittelanschluss (115) aufweist, über den der erste Druckmittelraum (107) mit einem ersten Druckmittelstrom (D1) beaufschlagbar ist.

7. Vorrichtung oder Kombination nach Anspruch 6,
**dadurch gekennzeichnet,**
**dass** der zweite Druckmittelraum (108), ausgehend von einem zweiten Druckmittelanschluss (7a), über eine in der ersten Antriebsstange (103) ausgebildete Druckmittelbohrung (103a), die sich in mindestens eine Querbohrung (103b) verzweigt, mit einem zweiten Druckmittelstrom (D2) beaufschlagbar ist.

8. Vorrichtung oder Kombination nach einem der Ansprüche 1 bis 5,
**dadurch gekennzeichnet,**
**dass** der erste Druckmittelraum (107), ausgehend von einem modifizierten ersten Druckmittelanschluss (7a*), über eine in der ersten Antriebsstange (103) ausgebildete Druckmittelbohrung (103a), die sich in mindestens eine zweite Querbohrung (103b*) verzweigt, mit einem modifizierten ersten Druckmittelstrom (D1*) beaufschlagbar ist.

9. Vorrichtung oder Kombination nach Anspruch 8,
**dadurch gekennzeichnet,**
**dass** der zweite Druckmittelraum (108) über eine Zufuhrbohrung (118) im ersten Antriebskolben (102) mit einem modifizierten zweiten Druckmittelstrom (D2*) beaufschlagbar ist, wobei die Zufuhrbohrung (118) aus einem Ringraum (117) ausmündet, der zwischen einer äußeren Mantelfläche des radial verjüngten ersten Antriebskolbens (102) und einer inneren Mantelfläche des Gehäuse (101) gebildet ist, und der Ringraum (117) über einen an dem Gehäuse (101) angeordneten modifizierten zweiten Druckmittelanschluss (115*) mit dem Druckmittelstrom (D2*) versorgt wird.

10. Vorrichtung oder Kombination nach einem der Ansprüche 1 bis 9 wenn die Vorrichtung in der ersten Konfiguration ist,
**dadurch gekennzeichnet,**
**dass** auf der dem zweiten Antriebskolben (105) abgewandten Seite des ersten Antriebskolbens (102) eine die erste Verstellstange (3a, 103) umschließende Mitnehmerhülse (119) vorgesehen ist, die im Zuge der ersten Teiloffenstellung (T1) einerseits an ihrem dem ersten Antriebskolben (102) zugewandten Ende in eine Mitnahmeverbindung mit der ersten Verstellstange (3a, 103) gelangt und andererseits ein kolbenfernes Ende entweder einer den ersten Antriebskolben (102) beaufschlagenden Hauptfeder (11) oder wenigstens einer inneren Feder (110"') eines Federpaketes (110', 110", 110"') hintergreift.

## Claims

1. Device (100) for actuating a double seat valve (1) provided with two closing elements (3, 4) movable independently with regard to each other, which enclose a leakage cavity (5) between them connected with the surrounding of the double seat valve (1) by at least one connecting path (3c),
and provided with the independently actuated first closing element (3), which comes to abut against the second closing element (4) after a partial lift and transfers it in its further opening movement also to a completely open position (H),
and provided with shifting rods (3a and 4a) engaging each other in telescoping manner, which are guided to the outside from a valve housing (10) at the side of the second closing element (4), by which the closing elements (3, 4) can each be moved to a partially open position (T1, T2) in addition to the completely open position (H) and independently from each other,
wherein, when the device (100) is connected with the double seat valve (1), the shifting rod (3a, 4a) is in connection with a first (103) and a second (104) actuating rod, respectively,
wherein the completely open position (H) is created by a main shifting device (200) and the partially open positions (T1, T2) by individual shifting devices (300, 400) associated with the respective closing elements (3, 4), the individual shifting devices (300, 400) being arranged between the main shifting device (200) and the valve housing (10) on the one hand and together with the main shifting device (200) in a common housing (101) on the other hand,
with a first actuating piston (102) of the main shifting device (200) and a second actuating piston (105) of the first individual shifting device (300), which jointly implement the completely open position (H) and the first partially open position (T1) at the first shifting rod (3a) of the first closing element (3) in an oppositely directed spreading movement, wherein the second actuating piston (105) is sealingly enclosed in its circumferential surface by the first actuating piston (102),
and with a third actuating piston (106) of the second individual shifting device (400) for the second closing element (4), which can be shifted towards the associated second partially open position (T2) for engagement into a carrier connection with the second actuating rod (104) of the second closing element (4),
wherein between the first and second actuating piston (102, 105) on the one side and the third actuating piston (106) on the other side a first pressure medium space (107) for the creation of the completely open position (H) is arranged, a second pressure medium space (108) for the creation of the first partially open position (T) is provided between the first and the second actuating piston (102, 105), and a third pressure medium space (109) for the creation of the second partially open position (T2) is arranged at the side of the third actuating piston (106) facing away from the first pressure medium space (107),
**characterised in that**
• the first and second actuating piston (102, 105) are arranged directly on the first actuating rod (103); such that the device can be utilised in two configurations, wherein
• either, in a first configuration of the device, the first actuating piston (102) is arranged, axially shiftable to a limited extent, on the first actuating rod (103), and the second actuating piston (105) is non-shiftable fixed on the first actuating rod (103) such that the device is suitable for the actuation of a double seat valve comprising a first (3) closing element formed as a valve piston and a second (4) closing element formed as a valve seat,
• or, in a second configuration of the device, the first actuating piston (102) is non-shiftable fixed on the first actuating rod (103), and the second actuating piston (105) is arranged, axially shiftable to a limited extent, on the first actuating rod (103) such that the device for actuating a double seat valve is suitable with two closing elements formed as valve seats.

2. Combination of a device according to claim 1 and a double seat valve with a first (3) closing element formed as the valve piston and a second (4) closing element formed as the valve seat,
**characterised in that**
the end section of the first closing element (3) formed as the valve piston comprises, with regard to its longitudinal axis, two axially distanced radial seat seals (8 and 9), between which leak holes (3e) are provided in the first closing element (3), which connect the surrounding of the first closing element (3) at the side of the circumferential surface with the leakage cavity (5), that both seat seals (8, 9) in the closed position of the double seat valve (1) are sealingly received in a cylindrically formed first seat (2a) and are sealingly shifted in the open position into a cylindrical recess (4b) aligned with the latter, and that in the seat cleaning position of the first closing element (3) this element is shifted against its opening movement by a partial lift, that the leak holes (3e) are connected with the valve housing part (1a) adjacent to the exposed seat (2a), and the sealing means (9) of the first closing element (3) at the side of the leakage cavity remains sealingly in the first seat (2a).

3. Device according to claim 1 or combination according to claim 2,
**characterised in that**
the non-shiftable fixation of the first actuating piston (102) occurs by means of a first joining means (114.1), which is arranged on the first actuating rod (103) at the side of the first actuating piston (102) facing away from the second actuating piston (105),
that the non-shiftable fixation of the second actuating piston (105) occurs by means of a second joining means (114.2), which is arranged on the first actuating rod (103) at the side of the second actuating piston (105) facing away from the first actuating piston (102),
and that between the two actuating pistons (102, 105) and on the first actuating rod (103) a second stop means (113) is arranged non-shiftable thereon and serving both actuating pistons (102, 105) in equal measure.

4. Device or combination according to claim 3,
**characterised in that**
the first and the second joining means (114.1, 114.2) are formed in form of a single joining means (114),
and that the second actuating piston (105) comprises on one of its front faces a concentric annular lug (105d) and a concentric recess (105d) on its other front face,
wherein the lug (105d) and the recess (105e) each are dimensioned such that the lug (105d) comes to abut against the end (104a) at the front face side of the second actuating rod (104), or that, with a reversed mounting position of the second actuating rod (105), the recess (105e) receives the end (104) at the front face side of the second actuating rod (104).

5. Device or combination according to claim 4,
**characterised in that**
the joining means (114; 114.1, 114.2) are formed as spacer rings.

6. Device according to one of the claims 1 to 5,
**characterised in that**
the first pressure medium space (107) comprises a first pressure medium connection (115) at the housing (101), through which a first pressure medium flow (D1) can be applied to the first pressure medium space (107).

7. Device or combination according to claim 6,
**characterised in that**
a second pressure medium flow (D2) can be applied to the second pressure medium space (108), starting from a second pressure medium connection (7a) through a pressure medium bore (103a) formed in the first actuating rod (103), which bore branches into at least one cross bore (103b).

8. Device or combination according to one of the claims 1 to 5,
**characterised in that**
a modified first pressure medium flow (D1*) can be applied to the first pressure medium space (107) starting from a modified first pressure medium connection (7a*) through a pressure medium bore (103a) formed in the first actuating rod (103), which bore branches into at least one second cross bore (103b*).

9. Device or combination according to claim 8,
**characterised in that**
a modified second pressure medium flow (D2*) can be applied to the second pressure medium space (108) through a supply bore (118) in the first actuating piston (102), wherein the supply bore (118) terminates out of an annular space (117), which is formed between an outer circumferential surface of the radially tapered first actuating piston (102) and an inner circumferential surface of the housing (101), and the annular space (117) is supplied with the pressure medium flow (D2*) through a second pressure medium connection (115*) arranged at the housing (101).

10. Device or combination according to one of the claims 1 to 9,
**characterised in that**
on the side facing away from the second actuating piston (105) of the first actuating piston (102) a carrier sleeve (119) enclosing the first shifting rod (3a, 103) is arranged, which in the course of the first partially open position (T1) reaches a carrier connection at its end facing towards the first actuating piston (102) with the first shifting rod (3a, 103) on the one hand, and engages behind an end distanced from the piston of either a main spring (11) acting upon the first actuating piston (102) or at least one inner spring (110''') of a set of springs (110', 110'', 110'''),

## Revendications

1. Dispositif de commande (100) d'une soupape à double siège (1) qui est équipée:
- de deux éléments de fermeture (3), (4) déplaçables indépendamment l'un de l'autre et déterminant entre eux une cavité de fuite (5) reliée par au moins un canal de communication (3c) à la zone environnante de la soupape à double siège (1),
- du premier élément de fermeture (3) commandé indépendamment qui, après une course partielle, vient s'appuyer sur le second élément de fermeture (4) et, en continuant sa course, emmène ce dernier également en position d'ouverture complète (H),
- de deux tiges de réglage (3a), (4a) engagées l'une dans l'autre de manière télescopique et sortant de la cage de soupape (10) du côté de l'élément de fermeture (4), par lesquelles les éléments de fermeture (3), (4) sont déplaçables dans une position d'ouverture partielle (T1), (T2), indépendamment et en complément de la position d'ouverture complète (H),
étant précisé que :
- lorsque le dispositif de commande (100) est rattaché à la soupape à double siège (1), les tiges de réglage (3a), (4a) sont reliées respectivement à la première (103) et à la seconde (104) tige de soupape,
- la position d'ouverture complète (H) est provoquée par un dispositif principal de réglage (200) tandis que les positions d'ouverture partielle (T1), (T2) sont provoquées par des dispositifs individuels de réglage (300), (400) coopérant avec l'élément de fermeture correspondant (3) (4), les dispositifs individuels de réglage (300), (400) étant disposés d'une part entre le dispositif principal de réglage (200) et la cage de soupape (10) et d'autre part ensemble avec le dispositif principal de réglage (200) dans une cage commune (101),
- le dispositif principal de réglage (200) comporte un premier piston de commande (102) et le premier dispositif individuel de réglage (300) comporte un second piston de commande (105), les deux pistons de commande provoquant ensemble la position d'ouverture complète (H) et par un mouvement d'écartement opposé la première position d'ouverture partielle (T1) de la première tige de réglage (3a) du premier élément de fermeture (3), la surface périphérique de la seconde tige de piston (105) étant entourée de manière étanche par la première tige de piston (102),
- le second dispositif individuel de réglage (400) pour le second élément de fermeture (4) comporte un troisième piston de commande (106) qui est déplaçable en direction de la seconde position d'ouverture partielle (T2) en vue de son engagement dans un élément d'entraînement avec la seconde tige de commande (104) du second élément de fermeture (4),
- entre d'une part les premier et second pistons de commande (102), (105) et d'autre part le troisième piston de commande (106) est prévue une première cavité (107) d'un moyen de pression en vue de provoquer le passage dans la position d'ouverture complète (H),
- entre le premier (102) et le second (105) piston de commande est prévue une seconde cavité (108) d'un moyen de pression en vue de provoquer le passage dans la première position d'ouverture partielle (T1), et,
- sur le côté du troisième piston de commande (106) opposé à la première cavité (107) d'un moyen de pression est prévue une troisième cavité (109) d'un moyen de pression en vue de provoquer le passage dans la seconde position d'ouverture partielle (T2),
**caractérisé en ce que**
- les premier (102) et second (105) pistons de commande sont disposés directement sur la première tige de commande (103) de façon à permettre l'utilisation du dispositif avec deux configurations différentes,
- selon une première configuration du dispositif, le premier piston de commande (102) est disposé sur la première tige de commande (103) en étant déplaçable axialement de manière limitée tandis que le second piston de commande (105) est disposé sur la première tige de piston (103) sans être déplaçable de sorte que le dispositif est adapté pour la commande d'une soupape à double siège avec un premier élément de fermeture (3) constitué d'un piston déplaçable et d'un second élément de fermeture (4) constitué d'un siège plan,
- selon une seconde configuration du dispositif, le premier piston de commande (102) est disposé sur la première tige de piston (103) sans être déplaçable tandis que le second piston de commande (105) est disposé sur la première tige de commande (103) en étant déplaçable axialement de manière limitée de sorte que le dispositif est adapté pour la commande d'une soupape à double siège dont les deux éléments de fermeture sont constitués de sièges plans.

2. Combinaison d'un dispositif selon la revendication 1 et d'une soupape à double siège avec un premier élément de fermeture (3) constitué d'un piston déplaçable et un second élément de fermeture (4) constitué d'un siège plan, **caractérisé en ce que**
- le segment d'extrémité du premier élément de fermeture (3) constitué d'un piston déplaçable comporte deux joints de siège radiaux (8), (9) par référence à l'axe longitudinal, disposés à une certaine distance axiale l'un de l'autre, entre lesquels sont prévus des orifices de passage (3e) ménagés dans le premier élément de fermeture (3) qui relient la zone environnante du premier élément de fermeture (3) située du côté de la surface enveloppante avec la cavité de fuite (5),
- les deux joints de siège (8), (9) trouvent en position de fermeture de la soupape à double siège (1) un appui étanche dans une première surface de siège (2a) cylindrique, et, en position d'ouverture de la ladite soupape, sont amenés en garantissant l'étanchéité dans un évidement cylindrique (4b) aligné sur ladite surface de siège, et,
- en position de nettoyage de son siège, le premier élément de fermeture (3) est déplacé d'une course partielle à l'encontre de son mouvement d'ouverture de sorte que les orifices de passage (3e) sont reliés à la partie de cage de soupape (1a) voisine de la surface de siège (2a) dégagée et que le moyen de pression (9) du premier élément de fermeture (3) situé du côté de la cavité de fuite reste en position étanche dans la première surface de siège (2a).

3. Dispositif selon la revendication 1 ou combinaison selon la revendication 2 **caractérisé en ce que**
- la position sans possibilité de déplacement du premier piston de commande (102) est assurée par un premier moyen d'assemblage (114.1) qui est prévu sur la première tige de commande (103) du côté du premier piston de commande (102) opposé au second piston de commande (105),
- la position sans possibilité de déplacement du second piston de commande (105) est assurée par un second moyen d'assemblage (114.2) qui est prévu sur la première tige de piston (103) du côté du second piston de commande (105) opposé au premier piston de commande (102),
- un second moyen de butée (113) est disposé sans possibilité de déplacement sur la première tige de commande (103), entre les deux pistons de commande (102), (105), pour servir de manière identique de butée aux deux pistons de commande (102), (105).

4. Dispositif ou combinaison selon la revendication 3 **caractérisé en ce que** le premier et le second moyen d'assemblage (114.1), (114.2) sont formés par un moyen d'assemblage unique (114) et que le second piston de commande (105) comporte sur l'une de ses faces frontales une saillie annulaire concentrique (105d) et sur son autre surface frontale un évidement concentrique (105e), ladite saillie (105d) et ledit évidement (105d) étant dimensionnés de sorte que la saillie (105d) vienne s'appuyer sur une extrémité frontale (104a) de la seconde tige de commande (104) ou que, en cas de montage en position opposée du second piston de commande (105), l'évidement (105e) reçoive l'extrémité frontale (104a) de la seconde tige de commande (104).

5. Dispositif ou combinaison selon la revendication 4 **caractérisé en ce que** les moyens d'assemblage (114), (114.1), (114.2) sont constitués de bagues d'espacement.

6. Dispositif ou combinaison selon l'une des revendications 1 à 5 **caractérisé en ce que** la première cavité de moyen de pression (107) comporte sur la cage (101) un raccord pour moyen de pression (115) par lequel la première cavité de moyen de pression (107) peut recevoir un premier flux de moyen de pression (D1).

7. Dispositif ou combinaison selon la revendication 6 **caractérisé en ce que** la seconde cavité de moyen de pression (108) peut recevoir un second flux de moyen de pression (D2) à partir d'un second raccord de moyen de pression (7a), par un alésage pour moyen de pression (103a) ménagé dans la première tige de commande (103) et bifurquant dans au moins un alésage perpendiculaire (103b).

8. Dispositif ou combinaison selon l'une des revendications 1 à 5 **caractérisé en ce que** la première cavité de moyen de pression (107) peut recevoir un flux modifié du premier moyen de pression (D1*) à partir d'un premier raccord modifié de moyen de pression (7a*), par un alésage pour moyen de pression (103a) ménagé dans la première tige de commande (103) et bifurquant dans au moins un second alésage perpendiculaire (103b*).

9. Dispositif ou combinaison selon la revendication 8 **caractérisé en ce que** la seconde cavité de moyen de pression (108) peut recevoir un flux modifié du second moyen de pression (D2*) par un alésage d'amenée (118) prévu dans le premier piston de commande (102) et sortant d'un espace annulaire (117) qui est déterminé par l'enveloppe extérieure du premier piston de commande (102) diminuant radialement et l'enveloppe intérieure de la cage (101) et qui est alimenté par le flux de moyen de pression (D2*) par un second raccord modifié de moyen de pression (115*) disposé sur la cage (101).

10. Dispositif ou combinaison selon l'une des revendications 1 à 9 lorsque le dispositif se trouve dans la première configuration, **caractérisé en ce que** sur le côté du premier piston de commande (102) opposé au second piston de commande (105) est prévue une douille d'entraînement (119) entourant la première tige de commande (3a), (103), qui d'une part arrive, lors du passage dans la première position d'ouverture (T1), par son extrémité orientée vers le premier piston de commande (102) dans une position d'entraînement avec la première tige de commande (3a), (103), et qui d'autre part s'engage derrière une extrémité éloignée du piston soit d'un ressort principal (11) pouvant exercer une pression sur le premier piston de commande (102), soit d'au moins un ressort intérieur (110"') d'un ensemble de ressorts (110'), (110"), (110"').
